# EUROPEAN PATENT APPLICATION

(11) **EP 3 808 649 A1**
(43) Date of publication of application: **21.04.2021**
(21) Application number: 19821957.8
(22) Date of filing: 18.06.2019
(51) Int. Cl.: B63J 3/04, H02B 1/24, B63J 3/00

(54) **SHIP TO WHICH LOW VOLTAGE DISTRIBUTION IS APPLIED**

(30) Priority: 18.06.2018 KR 20180069574; 19.07.2018 KR 20180084060; 24.10.2018 KR 20180127560; 24.10.2018 KR 20180127722; 30.04.2019 KR 20190050392; 30.04.2019 KR 20190050394; 30.04.2019 KR 20190050396
(71) Applicant: Korea Shipbuilding & Offshore Engineering Co., Ltd., Jongno-gu Seoul 03058 (KR); Hyundai Heavy Industries Co., Ltd., Ulsan 44032 (KR)
(72) Inventor: KANG, Nam Sook, Ulsan 44032 (KR); KIM, Sang Hyun, Ulsan 44032 (KR); JUNG, Tae Shik, Ulsan 44032 (KR)
(74) Representative: J A Kemp LLP
(86) International application number: PCT/KR2019/007326
(87) International publication number: WO 2019/245259

(57) **Abstract**

Embodiments of a first aspect of the present invention relate to a ship comprising: a first power system associated with an essential load; and a second power system associated with a service load.

## Description

### [Technical Field]

The present disclosure relates to a ship to which low voltage power distribution is applied, and more particularly, to a ship to which a power system is applied, in which the power system is separated into an essential load power system and a service load power system for each of ship electrical loads divided into an essential & important load and a service load, so that power is supplied to the load through low voltage (such as, for example, 440V) alternating current (AC) or direct current (DC) power distribution.

### [Background Art]

Ships are typical marine transportation means, and recently, with the development of ship construction technology and electronic technology, there is an increasing trend toward mounting electrical loads in ships.

The electrical loads in ships include an essential & important load relevant to navigation and a service load irrelevant to navigation. A thruster motor is a high capacity (about 2 MW) load used for docking/undocking of large ships, and a general container ship includes two thruster motors installed at the fore part.

In the case of a container ship, the essential load includes a thruster motor, a fuel oil supply pump and a fuel valve cooling pump, and the service load includes reefer containers.

Additionally, the essential load and the service load of the ship may include a continuous load with constant power consumption during driving, and a variable load having varying power consumption amounts depending on the driving characteristics, such as a Variable Frequency Drive (VFD) load and the reefer container load. In general, a ship uses an alternating current (AC) power supply system, and a continuous load and a variable load are put together and connected to a single power system, so the entire system has a very high load capacity.

In general, in the case of a large container ship, a single power system has a very high capacity of 10 MW or more. When power is supplied to all the loads of the large ship within the single system, the quantities of power supply cables rapidly increase. Additionally, since the critical load of the ship has a low rated voltage of 690 V or less, when the power system is designed to supply power at low voltage of 690 V or less, the power distribution voltage is lower than the system capacity and thus a very high current flows in the switchboard. Accordingly, due to the high current in the system, high priced shutoff equipment for high voltage is needed to protect a system accident. When the rated current is equal to or higher than 4000-5000 A, there is no shutoff equipment available in the market, so the single power system has limitations on the low voltage based power supply due to the capacity limitation.

Accordingly, in the case of a ship to which a power system of a specific scale or more is applied, to solve the quantities of cables and system capacity limitations caused by the low voltage high current, the power supply system inevitably needs to generate power at high voltage, converts it to low voltage and supplies the power to the load.

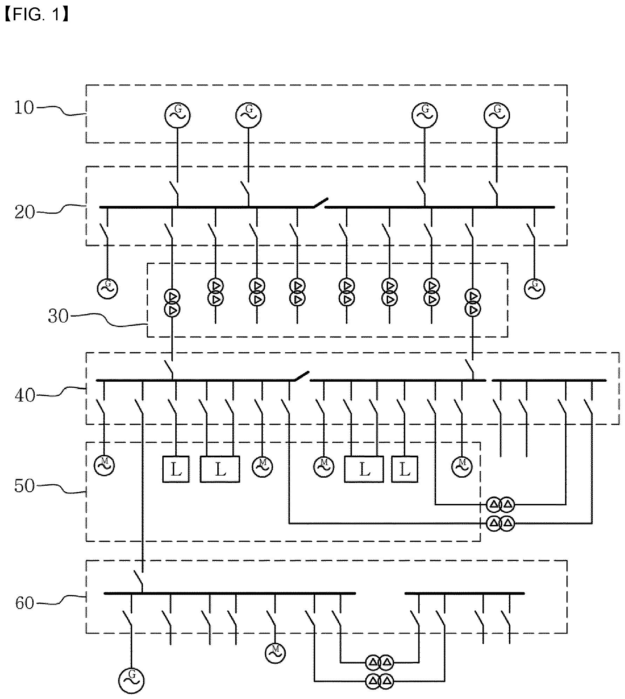

FIG. 1 is a diagram showing the system architecture of a power supply system for ships configured as a single system in which a continuous load and a variable load are put together according to an embodiment of the related art.

Referring to FIG. 1, the power supply system for ships in which a continuous load and a variable load are put together in a single power system includes a high voltage power generation unit 10; a high voltage switchboard 20; at least one step-down transformer 30 to decrease a high voltage electrical signal of the high voltage switchboard 20; a low voltage switchboard 40; a load unit 50 in which the continuous load and the variable load are put together; and an emergency switchboard 60.

As shown in FIG. 1, when the single power supply system for ships is applied to a large ship, in case that the system is on a predetermined scale or more, even though the rated voltage of the load is low voltage, high voltage power distribution is applied for the main distribution, and when branching to subsystems to which the loads are connected, power is supplied through the step-down transformer 30 which converts high voltage to low voltage.

The power supply system of FIG. 1 is configured as a single power system and thus has low performance in terms of power generation efficiency.

In the case of the AC power system, the power generation efficiency is optimal when the load factor amounts to 70-80%. Accordingly, the power supply system of FIG. 1 uses a fixed RPM power generator to generate power such that the load factor is 70-80%. The power generation capacity of the fixed RPM power generator included in the power generation unit 10 is calculated based on the maximum load power of the continuous load and the variable load. Accordingly, when the required power is lower than the maximum load power by the driving characteristics like the variable load, the load factor of the power generator reduces and the power generation efficiency reduces.

For example, when the power supply system of FIG. 1 is applied to a container ship, the container ship may include a reefer container which is a typical variable load. A large container ship carries the reefer container of about 1000 FEU, and the maximum power consumption of the reefer container is about 4.5-5 MW. The power consumption of the reefer container changes depending on the outside temperature and the type of cargo. On the average, the load factor of the reefer container is about 30-40% of the load terminal in the system. The low average load factor of the reefer container leads to the reduced load factor of the entire system in the single power system, and as a result, the power generation efficiency of the entire single power system reduces. That is, as a ratio of the variable load in the entire load is higher, the system of FIG. 1 has a significant reduction in the power generation efficiency.

Additionally, recently, there is an increase trend toward central cooling systems as well as VFD based loads for optimizing the power consumption of the load terminal according to the navigation characteristics. This trend affects reductions in the total load factor, resulting in the reduced power generation efficiency.

Additionally, since the power supply system of FIG. 1 is configured based on high voltage power distribution, there are limitations on the space utilization of the ship.

When high voltage of 6.6 kV is applied to the switchboard 20 of FIG. 1, the power supply process to the load is as follows: 6.6 kV power generator -> 6.6 kV high voltage high voltage main switchboard -> 6.6 kV/440 V transformer -> 440 V low voltage sub-switchboard. That is, the power supply system for ships of FIG. 1 generates power at high voltage, converts it to low voltage and supplies the power to the load.

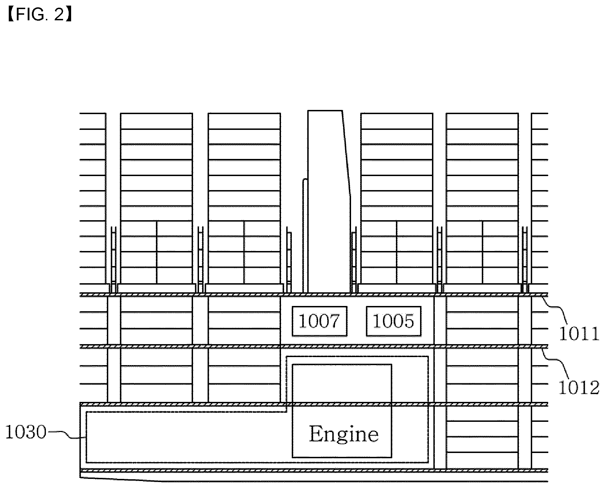

FIG. 2 is a diagram for describing the internal structure of the prior ship having the power supply system for ships of FIG. 1.

Referring to FIG. 2, the ship 1000 includes an engine room 1030. The engine room 1030 includes therein a variety of engine machine such as power generators and other machine connected to the engine machine, and includes an Engine Control Room (ECR) for controlling the engine and/or an ECR-switchboard room 1005 as a space in which the switchboard is positioned, and a transformer room 1007 as a space in which the step-down transformer 30 is positioned.

As described above, the power system of FIG. 1, to which partial high voltage power distribution is applied, needs the high capacity step-down transformer 40 to supply power to the load. Since high voltage power distribution is performed in the ship having the high capacity load, the transformer room 1007 in which the stepdown transformer 40 is positioned is very large in size.

For example, in the case of FIG. 1, specifications for each step-down transformer 40 are 6600/440 VAC, 3400 kVA, 3 ph, and when eight step-down transformers 40 having the dimensions of width (2.6 m) x length (2.65 m) x height (1.6 m) are installed in the ship, a considerate size of space is used as the transformer room. For example, two spaces in the ship (the engine room) having the dimensions of width (13-15 m) X length (6-8 m) X height (6-8 m) (for example, 13.25 m X 6.06 m X 6.62 m) are used as two transformer rooms. As a result, the available space in the ship reduces as much as the size that is equivalent to the corresponding transformer room.

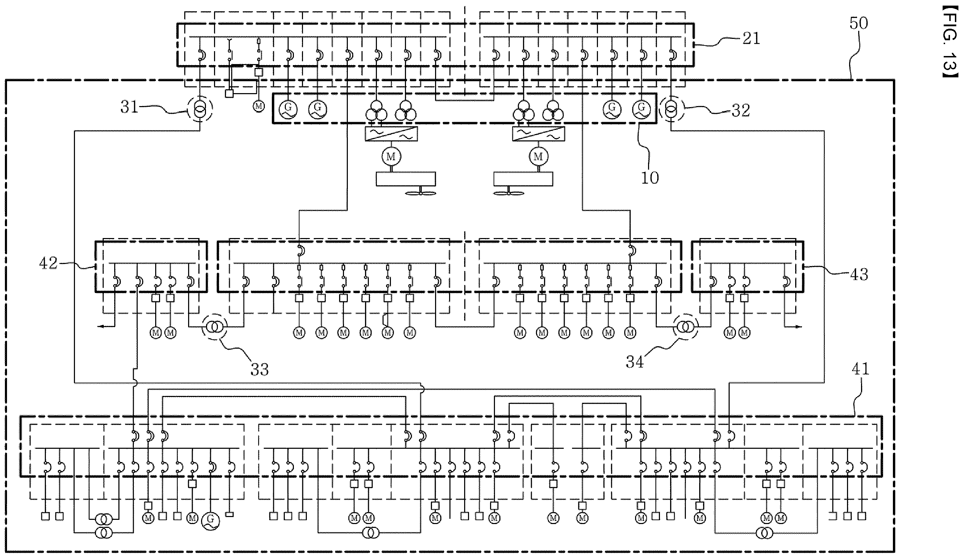

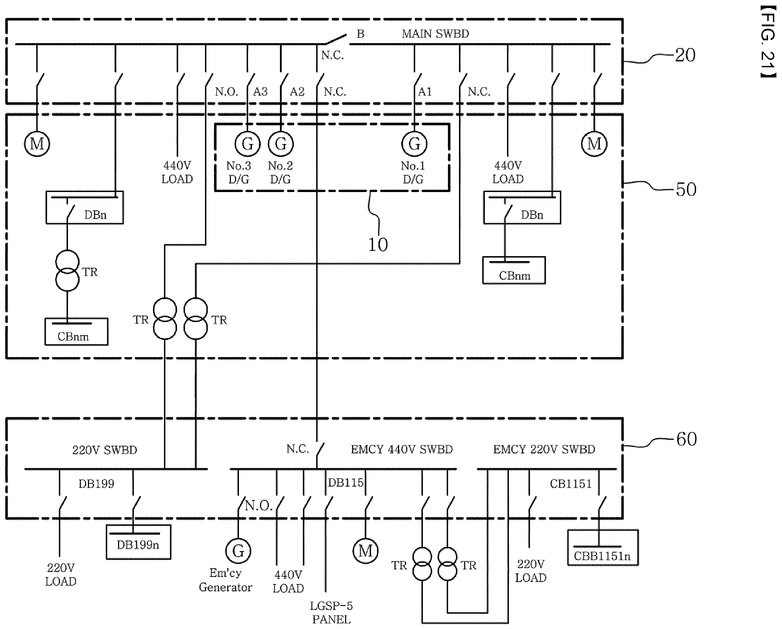

The problem with reduced power generation efficiency or reduced space utilization in the ship may occur in not only container ships, but also other types of ships such as liquefied natural gas (LNG) carriers or liquefied petroleum gas (LPG) carriers. In particular, the problem with reduced power generation efficiency or reduced space utilization in the ship that may occur in LNG carriers or LPG carriers will be described in more detail with reference to FIGS. 13 and 21 as below.

### [RELATED LITERATURES]

### [Patent Literatures]

[Patent Literature 1] Korean Patent Publication No. 10-2017-0118285

### [Disclosure]

### [Technical Problem]

According to a first aspect of the present disclosure, there are provided a power supply system that is separated into an essential load power system and a service load power system for each of ship electrical loads divided into an essential load and a service load, so that power is supplied to the load through low voltage (such as, for example, 440 V) power distribution, and a ship to which the power supply system is applied.

According to a second aspect of the present disclosure, there is provided a liquefied natural gas (LNG) carrier to which a power supply system for LNG carriers is applied, in which the power supply system is separated into an essential load power system and a service load power system for each of ship electrical loads divided into essential loads and service loads, so that power is supplied to the load through low voltage (such as, for example, 440 V) power distribution.

According to a third aspect of the present disclosure, there may be provided a power supply system that is separated into an essential load power system and a service load power system for each of electrical loads of a liquefied petroleum gas (LPG) carrier divided into an essential load and a service load, so that each power system belongs to a load factor range for high fuel efficiency or has a close load factor, and an LPG carrier to which the power supply system is applied.

### [Technical Solution]

In an embodiment according to a first aspect of the present disclosure, a ship having essential loads and service loads may include a first power system associated with the essential load; and a second power system associated with the service load.

Preferably, the first power system may include a first power generation unit, a first switchboard and a first load unit including the essential load required for navigation of the ship.

Preferably, the second power system may include a second power generation unit and a second switchboard; and a second load including a variable load.

Preferably, the first power system and the second power system may include only a low voltage switchboard which supplies power to the load by the application of low voltage.

Preferably, in the case of alternating current (AC), voltage of 1000 V or less (for example, 440 V) may be applied to the low voltage switchboard.

Preferably, at least some loads of the first load unit may be electrically connected to the first switchboard without a transformer.

Preferably, at least some loads of the second load unit may be electrically connected to the second switchboard without a transformer.

Preferably, the essential load may include at least one of a thruster motor, an engine fuel supply pump, a lubricating oil pump or a cooling pump.

Preferably, when the ship is a container ship, the service load may include a reefer container.

Preferably, at least one of the first power system or the second power system includes a variable RPM power generator.

Preferably, the first power generation unit may include a fixed RPM power generator or a variable RPM power generator.

Preferably, when the first power generation unit includes a variable RPM power generator, the first power generation unit may further include an AC/direct current (DC) converter to receive an AC electrical signal and convert to a DC electrical signal, and the first load unit may further include a DC/AC inverter to receive the DC electrical signal and convert to an AC electrical signal.

Preferably, the second power generation unit may include a fixed RPM power generator or a variable RPM power generator.

Preferably, when the second power generation unit includes a variable RPM power generator, the second power generation unit may further include an AC/DC converter to receive an AC electrical signal and convert to a DC electrical signal, and the second load unit may further include a DC/AC inverter to receive the DC electrical signal and convert an AC electrical signal.

Preferably, the essential load may include at least one of a thruster motor, an engine fuel supply pump, a lubricating oil pump or a Variable Frequency Drive (VFD) based load.

Preferably, when the second power generation unit includes a fixed RPM power generator, it may be configured to generate power having a frequency that matches a frequency of the second switchboard.

Preferably, the second power generation unit may include a plurality of power generators, and the second switchboard may include a plurality of buses.

Preferably, in the ship, only one of the plurality of power generators may generate power in a medium or low load section, and the second switchboard may be controlled by a closed-bus.

In another embodiment according to the first aspect of the present disclosure, a ship having essential loads and service loads may include a first power system associated with the essential load; and a second power system associated with the service load. Here, the second power system generates low voltage power and supplies the power to the service load.

Preferably, the second power system may include a second power generation unit, a second switchboard and the service load for services of the ship. Here, the service load includes a reefer container.

Preferably, the second switchboard is a low voltage switchboard, and is positioned in an engine room of an aft part.

Preferably, at least part of the reefer container may receive the power from the second switchboard through a reefer panel disposed at a fore part.

Preferably, the second power system may be further configured to convert the low voltage power of the second switchboard to high voltage power and transmit to the reefer panel.

Preferably, the second power system includes a step-up transformer to convert the low voltage power of the second switchboard to high voltage power; and a step-down transformer to convert the high voltage power to low voltage power and output to the reefer panel.

Preferably, the step-up transformer may be positioned in the engine room.

Preferably, the step-down transformer may be positioned in an Accom under space.

Preferably, the first power system and the second power system may include a fixed RPM power generator.

In still another embodiment according to the first aspect of the present disclosure, a ship having essential loads and service loads may include a first power system associated with the essential load; and a second power system associated with the service load. Here, a thruster motor is connected to the second power system.

Preferably, the second power system may include a second power generation unit, a second switchboard, the service load for services of the ship, the thruster motor, and a switching unit positioned between the service load and the thruster motor.

Preferably, the switching unit may be configured to interlock for the power supply from the second switchboard to the service load or the thruster motor.

Preferably, when the thruster motor operates, the switching unit may be switched to supply the power from the second power generation unit to the thruster motor through the second switchboard.

Preferably, when the thruster motor does not operate, the switching unit may be switched to supply the power from the second power generation unit to the service load through the second switchboard.

Preferably, the ship may further include a step-up transformer disposed between the second switchboard and the switching unit; and a step-down transformer positioned between the switching unit and the service load.

Preferably, the first power system and the second power system may include a fixed RPM power generator.

Preferably, the second power generation unit may include a variable RPM power generator.

Preferably, a power converter may be further included for matching a frequency of the power received from the variable RPM power generator with a frequency of the second switchboard.

Preferably, in an embodiment according to a second aspect of the present disclosure, a liquefied natural gas (LNG) carrier having essential loads and service loads may include: a first power system associated with the essential load; and a second power system associated with the service load.

Preferably, the first power system may include a first power generation unit, a first switchboard, and a first load unit including a continuous load required for navigation of the ship.

Preferably, the second power system may include a second power generation unit and a second switchboard; and a second load unit including a variable load.

Preferably, the first power system and the second power system may include only a low voltage switchboard to supply power to the load at low voltage.

Preferably, the first power system and the second power system may include a fixed RPM power generator.

Preferably, the first power system may include a fixed RPM power generator, and the second power system may include a variable RPM power generator.

Preferably, the second power system may further include a power converter for matching a frequency of an electrical signal received from the variable RPM power generator with a frequency of the second switchboard.

Preferably, the second power system may include an AC/DC converter to convert an AC electrical signal outputted from the power generation unit to a DC electrical signal; and a DC/AC inverter to convert the DC electrical signal to an AC electrical signal.

Preferably, at least the second power system may include a high voltage switchboard to supply power to the load at high voltage.

Preferably, the first power system and the second power system may include a fixed RPM power generator.

Preferably, the first power system may include a fixed RPM power generator, and the second power system may include a variable RPM power generator.

In another embodiment according to the second aspect of the present disclosure, an LNG carrier having essential loads and service loads may include: a first power system associated with the essential load; and a second power system associated with the service load. Here, a thruster motor is connected to the second power system.

Preferably, the LNG carrier may further include: a switching unit configured to switch to transmit the power generated by the first power system to the thruster motor of the second power system.

Preferably, the switching unit is configured to: switch to transmit the power generated by the first power system to the thruster motor of the second power system when the thruster motor starts to operate.

Preferably, the switching unit is configured to: switch to transmit the power generated by the first power system to the essential load when the thruster motor finishes operating.

Preferably, the switching unit may include Single Pole Double Throw (SPDT).

Preferably, the first power system may be configured to perform low voltage power distribution, and the second power system may be configured to perform high voltage power distribution. Additionally, the LNG carrier may further include: a transformer to receive a low voltage electrical signal from the switching unit and convert to a high voltage electrical signal.

In an embodiment according to a third aspect of the present disclosure, a liquefied petroleum gas (LPG) carrier having essential loads and service loads may include: a first power system associated with the essential load of the LPG carrier; and a second power system associated with the service load of the LPG carrier, separated from the first power system.

Preferably, the first power system may include a first power generation unit, a first switchboard and the essential load required for navigation of the LPG carrier.

Preferably, the second power system may include a second power generation unit, a second switchboard and the service load used to transport LPG.

Preferably, the power generation unit may include a fixed RPM power generator.

Preferably, the second power generation unit may include a variable RPM power generator.

Preferably, when the second load unit has a varying load section over time, the variable RPM power generator is controlled to RPM corresponding to the load section that is preset based on the service load.

Preferably, the second power generation unit may further include an AC/AC converter configured to convert a frequency of an AC electrical signal generated from the variable RPM power generator to a specific frequency of the second switchboard.

Preferably, the second power generation unit may further include an AC/DC converter to receive an AC electrical signal generated from the variable RPM power generator and convert to a DC electrical signal. Here, the second load unit may further include a DC/AC inverter to receive the DC electrical signal of the AC/DC converter and convert to an AC electrical signal.

Preferably, the service load may include at least one of a Cargo Compressor, a Cargo Pump, a Cargo Spray Pump, a stripping pump, a Deep Well pump or a Booster Pump.

In an embodiment according to the third aspect of the present disclosure, an LPG carrier having essential loads and service loads may include: a first power system associated with the essential load of the LPG carrier; a second power system associated with the service load of the LPG carrier; a redundancy unit to supply power from a power system in which an accident did not occur to a load unit of a power system in which the accident occurred; and a control unit to monitor an electrical signal of the first power system or the second power system, determine the power system in which the accident occurred based on the monitoring result and supply power from the power system in which the accident did not occur to the load unit of the power system in which the accident occurred.

Preferably, the second power system may include a first power generation unit including a plurality of power generators, a first switchboard, and a first load unit including the essential load required for navigation of the LPG carrier. Here, at least one of the plurality of power generators may be a standby power generator that does not operate during ordinary navigation.

Preferably, the second power system may include a second power generation unit, a second switchboard, and a second load unit including the service load.

Preferably, when an accident is detected in the power generator of the second power system, the control unit is configured to perform the power supply from the standby power generator to the second load unit.

Preferably, the redundancy unit is configured to perform the power supply from the standby power generator of the first power system to the service load of the second power system.

Preferably, the redundancy unit may include a switch for bus connection configured to transmit the power of the standby power generator to the second switchboard.

Preferably, the redundancy unit may include SPDT. Here, the SPDT is configured to connect a first path running from the standby power generator to the first switchboard, or a second path running from the standby power generator to the second switchboard.

Preferably, the redundancy unit may include SPDT. Here, when the second power generation unit further includes an AC/DC converter to receive an AC electrical signal generated from the variable RPM power generator and convert to a DC electrical signal, the SPDT is configured to connect a first path running from the standby power generator to the first switchboard, or a second path running from the standby power generator to the AC/DC converter.

Preferably, the service load may include at least one of a Cargo Compressor, a Cargo Pump, a Carp Spray Pump, a stripping pump, a Deep Well pump or a Booster Pump.

### [Advantageous Effects]

According to the first aspect of the present disclosure, a low voltage power distribution based power system of a ship is separated into an essential load power system and a service load power system according to the load characteristics.

In the case of container ships, the essential load power system includes the essential loads (for example, a thruster motor and an engine lubricating oil pump motor) which is essential for driving of the ship, and most of the essential load corresponds to a continuous load. The service load power system includes a load (for example, a cargo storage load such as the reefer container) which is not essential for driving of the ship, but is relevant to providing services by the ship, and most of the service load corresponds to a variable load.

Due to the load separation, the capacity of each power system reduces compared to the prior single system, and thus it is possible to supply power to the load in each power system using only a low voltage switchboard. As a result, it is possible to eliminate the need for high voltage power distribution, and eliminate the need for a high voltage switchboard and a high capacity step-down transformer.

As described above, since a plurality of step-down transformers is not used, in the case of container ships, it is possible to obtain the cost saving effect of about 250 million per ship in terms of Capital expenditures (CAPEX).

Further, the space (i.e., the transformer room) provided for a step-down transformer may be used for a variety of other purposes. In general, since the corresponding step-down transformer is disposed in the engine room having high equipment density, it greatly affects the space utilization improvement in the ship.

Additionally, since the power system for essential load and the power system for service load are separately configured, it is possible to increase the stability of each system. When a system accident occurs in the service load terminal, since the prior system is configured as a single system, the essential load is affected. In case that the system is separately configured, when an accident occurs in the service load terminal, the corresponding system accident spreads only in the power system for service load, and thus does not affect the power system for essential load. Likewise, in case that the system is separated, when an accident occurs in the essential load terminal, the corresponding accident does not spread to the service load terminal.

Additionally, since the power system is separated, each power system may have an independent system configuration. For example, the power generator type, the voltage for power distribution or the electrical signal type of each power system may be independently configured and operated.

In an embodiment, the system is designed to configure and operate a power generator best suited for the load characteristics to have high power generation efficiency. For example, power is supplied by installing a fixed RPM power generator in a power system primarily including a continuous load, and a variable RPM power generator in a power system primarily including a variable load.

In an embodiment, in the case of container ships, a power generator having the power generation capacity indicating the optimal efficiency for continuous load power supply is installed in the essential load power system and driven at the fixed RPM, and a variable RPM power generator for optimizing the variable load power generation efficiency having a variable load factor is installed in the service load power system.

In the case of the reefer container which is a typical service load in the container, the average load factor is 30-40% of the entire load terminal in the system. When comparing with the power system of FIG. 1 which supplies power to the service load using the fixed RPM power generator, the amount of fuel consumed for generating 1 kmh power on the basis of the load factor of 35% reduces from about 216 g to about 190 g. That is, in the case of the container ship according to the present disclosure, it is possible to improve the fuel consumption by about 13%.

Accordingly, in a container ship using Marin Gas Oil (MGO) of $640/ton as fuel, when calculating with the fuel consumption improvement being simplified as 10%, the fuel cost saving effect of OPEX USD 2,4000/year (= USD 9,636/day × improvement efficiency (10%) × number of sailing days (generally 250 days)) may be obtained.

In another embodiment, when a variable RPM power generator is installed in the essential load power system, the variable RPM power generator may be connected to the Variable Frequency Drive (VFD) based load included in the essential load terminal. As a result, when the load factor of the VFD based load reduces according to the navigation characteristics of the ship, it is possible to solve the problem with reduced power generation efficiency caused by the reduced load factor due to the reduced power consumption amount.

Further, the power distribution method in each power system may be configured to enable low voltage direct current (DC) power distribution and/or low voltage alternating current (AC) power distribution. That is, as opposed to the prior power supply system that is difficult to enable DC power distribution, it is possible to freely set the power distribution type, thereby achieving the flexible power supply according to the characteristics of the power generation unit and the load.

In another embodiment, the power supply system for ships may supply power to a power system primarily including a variable load using a fixed RPM power generator. Using the fixed RPM power generator, it is possible to reduce the power generator costs, and eliminate the need for a power converter required when a variable power generator is applied.

In still another embodiment, the power supply system for ships may efficiently perform long distance power supply from the low voltage switchboard of the engine room disposed at the aft part using the step-up transformer to the reefer panel disposed at the fore part.

In yet another embodiment, in the power supply of a thruster motor 152 which is disposed at the fore part and driven only when entering/leaving the port, the service load power system configured to distribute the power to the service loads of the fore part to supply power to the reefer container may supply the power, thereby reducing the power generation capacity of the essential load power system.

According to the second aspect of the present disclosure, a low voltage power distribution based power system of a liquefied natural gas (LNG) carrier is separated into an essential load power system and a service load power system according to the load characteristics. The essential load power system includes an essential load (for example, a thruster motor, a propulsion motor and an engine lubricating oil pump motor) relevant to the driving of the LNG carrier, and most of the essential load corresponds to a continuous load. The service load power system includes a load (for example, a cargo pump, a high duty (HD) compressor, a low duty (LD) compressor and a vaporizer) which is not essential for driving of the LNG carrier, but is relevant to providing services by the LNG carrier, and most of the service load corresponds to a variable load.

Due to the load separation, the capacity of each power system reduces compared to the prior single system, and thus it is possible to supply power to the load in each power system only by low voltage power distribution. Accordingly, it is possible to eliminate the need for high voltage power distribution, and eliminate the need for a high capacity step-down transformer which converts high voltage to low voltage. Since the step-down transformer is not used, it is possible to obtain the cost saving effect in terms of CAPEX.

Further, the space (i.e., the transformer room) provided for a step-down transformer may be used for a variety of other purposes. In general, since the corresponding step-down transformer is disposed in the engine room having high equipment density, it greatly affects the space utilization improvement in the ship.

Additionally, since the power system for essential load and the power system for service load are separately configured, it is possible to increase the stability of each system. When a system accident occurs in the service load terminal, since the prior system is configured as a single system, the essential load is affected. In case that the system is separately configured, when an accident occurs in the service load terminal, the corresponding system accident spreads only in the power system for service load, and does not affect the power system for essential load. Likewise, in case that the system is separated, when an accident occurs in the essential load terminal, the corresponding accident does not spread to the service load terminal.

Additionally, since the power system is separated, each power system may have an independent system configuration. For example, the power generator type, the voltage for power distribution or the electrical signal type of each power system may be independently configured and operated.

In an embodiment, the system is configured to configure and operate a power generator best suited for the load characteristics to have high power generation efficiency. For example, a fixed RPM power generator more suitable for continuous load power supply is installed in a power system primarily including a continuous load and driven in the fixed RPM to have the power generation capacity indicating the optimal efficiency for continuous load power supply, and a variable RPM power generator more suitable for variable load power supply is installed in a power system primarily including a variable load and driven in the variable RPM having the optimal efficiency for variable load power supply.

As a result, it is possible to reduce the amount of fuel consumed by the LNG carrier.

In another embodiment, the system may supply power to a power system primarily including a variable load using a fixed RPM power generator. Using the fixed RPM power generator, it is possible to reduce the power generator costs, and eliminate the need for a power converter required when the variable power generator is applied.

Further, the power distribution method in each power system may be configured to enable low voltage DC power distribution and/or low voltage AC power distribution. That is, as opposed to the prior power supply system that is difficult to enable DC power distribution, it is possible to freely set the power distribution type, thereby achieving the flexible power supply according to the characteristics of the power generation unit and the load.

In an embodiment, the system is configured such that the service load power system supplies power to the thruster motor which is disposed at the fore part and driven only when entering/leaving the port. Accordingly, it is possible to reduce the power generation capacity of the essential load power system.

According to the third aspect of the present disclosure, a low voltage power distribution based power system of a liquefied petroleum gas (LPG) carrier is separated into an essential load power system and a service load power system according to the load characteristics. The essential load power system includes t essential loads (for example, a cooling pump, an engine lubricating oil pump motor and a ballast pump) relevant to the driving of the LPG carrier, and most of the essential load corresponds to a continuous load. The service load power system includes a load (for example, a cargo compressor, a cargo spray pump and a stripping pump) which is not essential for driving of the LPG carrier, but is relevant to providing services by the LPG carrier, and most of the service load corresponds to a variable load.

Due to the load separation, the capacity of each power system reduces compared to the prior single system, and thus it is possible to reduce the capacity of the power generator (or the engine) in the essential load power system. Accordingly, it is possible to reduce the power generator installation costs and increase the space utilization in the engine room.

Additionally, due to the load separation, each power system belongs to a load factor range for high fuel efficiency or has a close load factor. Accordingly, the power supply system may obtain the improved power generation efficiency compared to the single system structure.

Further, each separated power system may have an independent system configuration. In an example, the essential load power system, the majority of which are a continuous load, is configured to include a fixed RPM power generator, and the service load power system, the majority of which are a variable load, is configured to include a variable RPM power generator. By the application of the power generator considering the load characteristics, the power supply system has high fuel efficiency (especially, in the service load power system, in the case of the medium/low load section). In another example, the service load power system may be configured to enable partial DC power distribution.

In an embodiment, the separated power systems may be further configured to be connected through a connection device (for example, a bus-tie breaker or Single Pole Double Throw (SPDT)). Accordingly, the service load power system does not require an additional power generator or the increased capacity to supply power to the service load.

Additionally, when the connection device is configured to be connected when an accident occurs in the power generator of the service load power system, it is possible to safely transport LPG by controlling the temperature and pressure of the cargo tank in which LPG is stored. As described above, since the power supply system is designed with a redundancy structure, it is possible to enhance the stability and reliability of the service load power system.

The effects of the present disclosure are not limited to the above-mentioned effects, and other effects not mentioned herein will be clearly understood by those skilled in the art from the appended claims.

### [Description of Drawings]

The following is a brief introduction to necessary drawings in the description of the embodiments to describe the technical solutions of the embodiments of the present disclosure or the prior technology more clearly. It should be understood that the accompanying drawings are for the purpose of describing the embodiments of the present disclosure only and are not intended to be limiting of the present disclosure. Additionally, for clarity of description, the accompanying drawings may show variously modified elements such as exaggerated and omitted elements.
FIG. 1 is a diagram showing the system architecture of a power supply system for ships configured as a single system in which a continuous load and a variable load are put together, according to an embodiment of the related art.
FIG. 2 is a diagram for describing the internal structure of the prior ship having the high voltage power distribution based single power system of FIG. 1.
FIG. 3 is a schematic system architecture diagram of a power supply system for ships including a separated power system, in an embodiment according to a first aspect of the present disclosure.
FIG. 4 is a diagram showing a relationship between the load factor of a load terminal in a power system and the fuel consumption amount of a power generator which supplies power to the load terminal.
FIG. 5 is a schematic system architecture diagram of a power supply system for ships configured with AC power distribution for an essential load power system and DC power distribution for a service load power system, in an embodiment according to a first aspect of the present disclosure.
FIG. 6 is a schematic system architecture diagram of a power supply system for ships configured with DC power distribution for an essential load power system and AC power distribution for a service load power system, in another embodiment according to a first aspect of the present disclosure.
FIG. 7 is a schematic system architecture diagram of a power supply system for ships configured with DC power distribution for an essential load power system and a service load power system, in still another embodiment according to a first aspect of the present disclosure.
FIG. 8 is a schematic system architecture diagram of a power supply system for ships configured with fixed RPM based AC power distribution for an essential load power system and a service load power system, in yet another embodiment according to a first aspect of the present disclosure.
FIG. 9 is a schematic system architecture diagram of a power supply system for ships for use of the space of the prior transformer room for any purpose other than container shipping, in further another embodiment according to a first aspect of the present disclosure.
FIG. 10 is a side structure diagram of a container ship in which a step-up transformer and a step-down transformer of FIG. 9 are positioned.
FIG. 11 is a schematic system architecture diagram of a power supply system for ships including a separated power system, in an embodiment according to a first aspect of the present disclosure.
FIG. 12 is a schematic system architecture diagram of a power supply system for ships including a separated power system, in another embodiment according to a first aspect of the present disclosure.
FIG. 13 is a diagram showing the system architecture of a power supply system for LNG carriers configured as a single system in which an essential load and a service load are put together, according to another embodiment of the related art.
FIG. 14 is a diagram for describing the internal structure of the prior LNG carrier having the power supply system for LNG carriers of FIG. 13.
FIG. 15 is a schematic system architecture diagram of a power supply system for LNG carriers including a separated power system, in an embodiment according to a second aspect of the present disclosure.
FIG. 16 is a schematic system architecture diagram of a power supply system for LNG carriers configured such that a service load power system has a variable RPM power generator, in an embodiment according to a second aspect of the present disclosure.
FIG. 17 is a diagram showing a relationship between the load factor of a load terminal in a power system and the fuel consumption amount of a power generator which supplies power to the load terminal.
FIG. 18 is a schematic system architecture diagram of a power supply system for LNG carriers configured such that an essential load power system has a fixed RPM power generator to perform AC power distribution and a service load power system has a variable RPM power generator to perform partial DC power distribution, in an embodiment according to a second aspect of the present disclosure.
FIG. 19 is a schematic system architecture diagram of a power supply system of an LNG carrier including a separated power system, in another embodiment according to a second aspect of the present disclosure.
FIG. 20 is a schematic system architecture diagram of a power supply system of an LNG carrier including a separated power system, in still another embodiment according to a second aspect of the present disclosure.
FIG. 21 is a diagram showing the system architecture of a power supply system for LPG carriers configured as a single system in which a continuous load and a variable load are put together, according to still another embodiment of the related art.
FIG. 22 is a schematic system architecture diagram of a power supply system for LPG carriers including a separated power system, in an embodiment according to a third aspect of the present disclosure.
FIG. 23 is a schematic system architecture diagram of a power supply system for LPG carriers configured such that a service load power system has a variable RPM power generator, in an embodiment according to a third aspect of the present disclosure.
FIG. 24 is a diagram showing a relationship between the load factor of a load terminal in a power system and the fuel consumption amount of a power generator which supplies power to the load terminal.
FIG. 25 is a schematic system architecture diagram of a power supply system for LPG carriers configured such that an essential load power system has a fixed RPM power generator to perform AC power distribution and a service load power system has a variable RPM power generator to perform partial DC power distribution, in an embodiment according to a third aspect of the present disclosure.
FIG. 26 is a schematic system architecture diagram of a power supply system for LPG carriers further configured to distribute power to the service loads in case of emergency, in an embodiment according to a third aspect of the present disclosure.
FIG. 27 is a schematic system architecture diagram of a power supply system for LPG carriers further configured to distribute power to the service loads in case of emergency, in another embodiment according to a third aspect of the present disclosure.
FIG. 28 is a schematic system architecture diagram of a power supply system for LPG carriers further configured to distribute power to the service loads having a variable RPM power generator to perform partial DC power distribution in case of emergency, in an embodiment according to a third aspect of the present disclosure.

**[Detailed Description of Main Elements]**

| | |
|---|---|
| 1: Power supply system for ships | |
| 200: Service load power system | |
| 100: Essential load power system | |
| 210: Service load power generator unit | |
| 110: Essential load power generator unit | 211, 212: Power generator |
| 111, 112: Power generator | 213: Switch |
| 113: Switch | 214: AC/AC converter |
| 116: AC/DC converter | 216: AC/DC converter |
| 120: Redundancy unit | 220: DC switchboard |
| 125: Switching unit | 221: DC main bus |
| 130: Switchboard | 226: DC/AC inverter |
| 131, 132: Main bus | 230: Switchboard |
| 133: Bus tie breaker | 231, 232: Main bus |
| 150: Essential load unit | 233: Bus tie breaker |
| 152: Thruster motor | 250: Service load unit |
| 153: Step-up transformer | 256: DC/AC inverter |
| 154: Sub-switchboard | 260: Transformation unit |
| 155: Transformer | 261: Step-up transformer |
| 156: DC/AC inverter | 266: Step-down transformer |
| 160: Emergency switchboard | 270: First sub-switchboard |
| 280: Second sub-switchboard | |

### [Mode for Invention]

The terminology used herein is for the purpose of describing particular embodiments only and is not intended to be limiting of the present disclosure. Unless the context clearly indicates otherwise, the singular forms include the plural forms as well. The term "comprises" or "includes" when used in this specification, specifies the presence of stated features, regions, integers, steps, operations, elements, and/or components, but does not preclude the presence or addition of one or more other features, regions, integers, steps, operations, elements and/or components.

Unless otherwise defined, all terms (including technical and scientific terms) used herein have the same meaning as commonly understood by those skilled in the art. It will be understood that terms, such as those defined in commonly used dictionaries, should be interpreted as having a meaning that is consistent with their meaning in the context of the relevant art document, and will not be interpreted in an idealized or overly formal sense unless expressly so defined herein.

The term ship as used herein is a ship including the essential loads which are essential for navigation of the ship and the service loads additionally used for any function other than navigation, and refers to a variety of ships such as container ships, fuel carrier and passenger ships. Hereinafter, the present disclosure will be described based on container ships, liquefied natural gas (LNG) carriers and liquefied petroleum gas (LPG) carriers, but it will be obvious to those skilled in the art that the present disclosure is not limited to these ship types.

In the specification, load system separation into an essential load system and a service load system represents that the essential load and the service load are put together in the same system, such as being supplied with power through the same switchboard. The different separated systems are configured to be supplied with power by different main switchboards included therein, respectively. The separation of the load system is not permanent, and different load systems may be connected by any element (for example, a Single Pole Double Throw (SPDT) switch or a bus tie breaker) capable of electrically connect the power supply elements.

In the specification, the embodiments relate to a power system of a ship. In the case of ships, the International provisions define direct current (DC) low voltage as 1500 V or less and alternating current (AC) low voltage as 1000 V or less, and unless defined otherwise, the term "low voltage" as used herein refers to a voltage corresponding to 1500 V or less in the case of DC and 1000 V or less in the case of AC.

The power supply system for ships according to the embodiments of the present disclosure is configured such that a power system is separated into an essential load power system primarily including the essential load and the service load power system primarily including the service loads.

Due to the separation of the system, the capacity of the load of each power system reduces compared to the single power system, thereby enabling the low voltage power distribution.

Hereinafter, the embodiments of the present disclosure will be described with reference to the accompanying drawings.

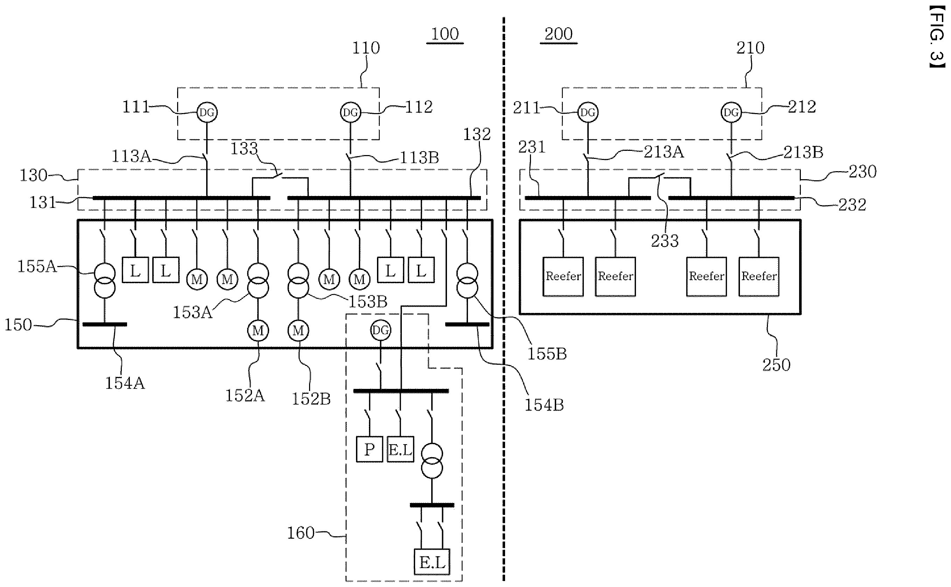

FIG. 3 is a schematic system architecture diagram of a power supply system for ships including a separated power system, in an embodiment according to a first aspect of the present disclosure.

Referring to FIG. 3, the power supply system 1 for ship includes at least one power system 100, 200. The power system 100 includes a power generation unit 110, a switchboard 130 including a main switchboard and the essential load unit 150 including the essential loads. The power system 200 includes a power generation unit 210, a switchboard 230 including a main switchboard and a service load unit 250 including the service loads.

Additionally, the power supply system 1 for ships may further include a control unit (not shown) to monitor the condition of the power system and control the power supply. The control unit may include at least one of a Power Management System (PMS), an Energy Management System (EMS) or an Energy Power Management System (EPMS).

Hereinafter, for clarity of description, the power supply system 1 for ships is described as including two power systems 100, 200, but is not interpreted as being limited thereto. Additionally, in some cases, the detailed description of the two elements is made representative of a detailed description of one element.

As shown in FIG. 3, the power supply system 1 for ships is configured such that the power system is separated for each of the essential load and the service load. The essential load and the service load do not share the same switchboard.

The power generation unit 110 supplies power to the essential load unit 150 through the switchboard 130 to allow the load of the essential load unit 150 to consume the power and bring it into operation.

The power generation unit 110 outputs an AC electrical signal, and includes a plurality of power generators (for example, power generators 111, 112 of FIG. 3). The attributes and power generation capacity of the power generators 111, 112 rely on the load. For example, when the motor load for the operation of the ship is a constant output load, an AC power generator may be used. Additionally, when the capacity factor of the power generator is 85% and the load capacity is 1 MW, the power generation capacity of the power generator may be about 1.2 MW.

In an embodiment, when an accident occurs in a power generator (for example, 111) which is operating in the essential load power system 100, the power supply system 1 is configured to supply power from a standby power generator (for example, 112) included in the essential load power system 100 to the essential load unit 150.

The power generators 111, 112 may include diesel generators, hybrid fuel power generators, gas fuel power generators and gas turbines, but are not limited thereto.

Additionally, the power generation unit 110 may further include at least one switch and/or disconnector to control the power supply according to situations. For example, as shown in FIG. 3, when the power supply system 1 for ships includes two power generators 111, 112, the power supply system 1 for ship may further include two switches 113A, 113B.

The switch and/or disconnector is not a high priced power connection device for high voltage, and is a power connection device for low voltage.

The switchboard 130 performs AC power supply. In an embodiment, the switchboard 130 may include a main switchboard of the power system 100. The main switchboard may include a bus cable, and in this case, the bus cable may be referred to as a main bus.

Additionally, in some embodiments, the switchboard 130 may include a plurality of bus cables. For example, the switchboard 130 may include a plurality of bus cables such as a main bus 131 electrically connected to the power generator 111, a main bus 132 electrically connected to the power generator 112. In this case, the switchboard 130 may further include a bus tie breaker 133 which electrically connects the plurality of main buses 131, 132 in normal condition, but shuts off the electrical connection in case of emergency and/or accidents.

As low voltage may be applied to the switchboard 130, the power system 100 enables low voltage power distribution. For example, power is supplied to the load by the application of AC voltage of 440 V to the main bus 131 and the main bus 132 of FIG. 3.

The elements of the power system 100 may be electrically connected to each other for their interaction. For example, the power supply system 1 for ships may supply power to the essential load using a power supply line electrically connecting from the power generation unit 110 to the essential load unit 150 through the switchboard 130.

The essential load unit 150 of the power system 100 includes the essential load which is essentially required to operate for ship navigation. The essential loads includes the essential load defined by the marine vessel rules and a secondary essential load (for example, an important load) which is essentially required to operate for ship navigation, but not included in the essential load according to the marine vessel rules.

The essential load used for the operation of the container ship may include, for example, a thruster motor 152, a lubricating oil pump, an engine fuel supply pump and a cooling pump, but is not limited thereto. Most of the essential load included in the essential load unit 150 corresponds to a continuous load having a nearly invariable load factor.

In some embodiments, the essential load unit 150 may further include a Variable Frequency Drive (VFD) based load. The VFD based load is the essential load which optimizes the power consumption of the load terminal according to the navigation characteristics, such as a Central Cooling System. For example, the VFD load includes the essential load configured to control the temperature and pressure of the cooling pump configured to control the temperature of cooling water.

As described above, the switchboard 130 is configured to perform low voltage power distribution. Accordingly, as shown in FIG. 3, at least some essential loads may be supplied with power via direct electrical connection without a separate transformer.

In an embodiment, the essential load unit 150 may further include a power supply line (not shown) to electrically connect the thruster motor 152 from the switchboard 130, and a step-up transformer 153 to supply power to the thruster motor 152 more efficiently.

The thruster motor 152 is a motor used for docking/undocking of the ship. The thruster motor 152 is a high load which consumes high capacity power, compared to other continuous loads. For example, the thruster motors 152A, 152B of FIG. 3 have the load capacity of about 2 MW. Accordingly, for the power supply by the low voltage switchboard 130 to which low voltage such as 440 V is applied, it is necessary to install 8-10 strands of cable 270A with the cross-sectional area of 150 SQMM, and it may not be easy to install the power supply line in the ship 1000.

The power supply line is an element which electrically connects from the switchboard 130 to the thruster motor 152, and in an example, the power supply line may be a cable.

The step-up transformer 153 is a transformer which increases the low voltage supplied by the switchboard 130, and the output voltage of the step-up transformer 153 corresponds to the operating voltage of the thruster motor 152. The step-up transformer 153 is a different transformer from the step-down transformer 40 of FIG. 1, and the step-up transformer 153 has a higher output voltage than the voltage of the switchboard 130, but is still configured to output low voltage of 1500 V or less.

The voltage increases from low voltage to high voltage by the step-up transformer 153, and the magnitude of the electric current in the corresponding power supply line is reduced by the step-up transformer 153. As a result, it is possible to reduce a voltage drop, thereby reducing the cross-sectional area and/or the number of strands of the cable. In an embodiment, the cross-sectional area of the cable may be 50 SQMM, and in another embodiment, the cross-sectional area of the cable may be 50 SQMM to 75 SQMM. Additionally, the power supply system 1 for ships may supply power to the thruster motor 152 using one strand of cable.

As a result, in FIG. 3, when the step-up transformer 153 is not included, 8-10 strands of cable having the cross-sectional area of 150 SQMM are required, but as shown in FIG. 3, when the step-up transformer 153 is used, it is possible to supply power to the thruster motor 152 having the load capacity of 2 MW using one strand of 50 SQMM cable.

Additionally, in some embodiments, the essential load unit 150 may further include at least one sub-switchboard 154 to supply power at lower voltage (for example, 220 V) than the voltage of the switchboard 130. In this case, the essential load unit 150 may further include a transformer 155 positioned between the switchboard 130 and the sub-switchboard 154 to decrease the voltage. For example, as shown in FIG. 3, the essential load unit 150 may include transformers 155A, 155B between the switchboard 130 (for example, to which 450 V is applied) and the sub-switchboards 154A, 154B (for example, to which 220 V is applied).

The capacity of the essential load power system 100 is lower than the capacity of the single power system of FIG. 1, and thus the transformer of the essential load unit 150 is a small transformer having lower capacity than the transformer of FIG. 1. Accordingly, there are benefits in terms of transformer installation costs and space utilization.

Additionally, the power system 100 may further include an emergency power generator to supply power in emergency situations such as blackouts and an emergency switchboard 160 including a load which operates in that time. The emergency switchboard 160 may include shore power and emergency load.

The elements and operations of the power system 200 are similar to the elements and operations of the power system 100 in a significant part. The switchboard 230 is also configured to perform low voltage power distribution. Accordingly, the power system 200 will be described based on differences from the power system 100.

In contrast, the service load unit 250 of the power system 200 includes the service loads additionally used for any purpose other than the navigation of the ship. The variable load unit 250 may further include at least one sub-switchboard (not shown) to supply power at lower voltage than the switchboard 230.

In the case of a container ship, the service load includes a cargo storage load used to store cargo and a user convenience load used for convenience of passengers of the ship. When the ship is a container ship, the service load unit 250 includes a reefer container in which the cargo of the ship is stored, but is not limited thereto.

The reefer container is configured to change the storage temperature over time. Accordingly, most of the service load corresponds to a variable load having a variable load factor.

As described above, since each separated power system 100, 200 of the power supply system 1 for LPG carriers has an independent system configuration, the power systems 100, 200 may be configured variously or differently depending on the design purpose.

In an embodiment, each power system 100, 200 is configured to configure and operate a power generator of optimal type for the load type primarily included therein.

For example, the essential load power system 100 may include a fixed RPM power generator, and the service load power system 200 may include a variable RPM power generator. In this case, in FIG. 3, the power generators 111, 112 of the essential load power system may be fixed RPM power generators, and the power generators 211, 212 of the service load power system 200 may be variable RPM power generators.

In the case of the continuous load, there is no load variation due to the constant output characteristics, so there is almost no change in the load factor, while the variable load changes in the load factor.

Since most of the load of the essential load power system 100 corresponds to the continuous load having an invariable load factor, the fixed RPM power generator drives to operate in the optimal efficiency range. For example, the power generators 111, 112 of FIG. 3 are configured to operate in the optimal efficiency range (i.e., the load factor range of 75 to 85%).

The prior single system based power supply system shown in FIG. 1 has a load section in which the load factor of the entire system is low due to the variable load since the electrical loads of the LNG carrier are put together in the single system. Accordingly, the power generation efficiency of the fixed RPM power generation reduces.

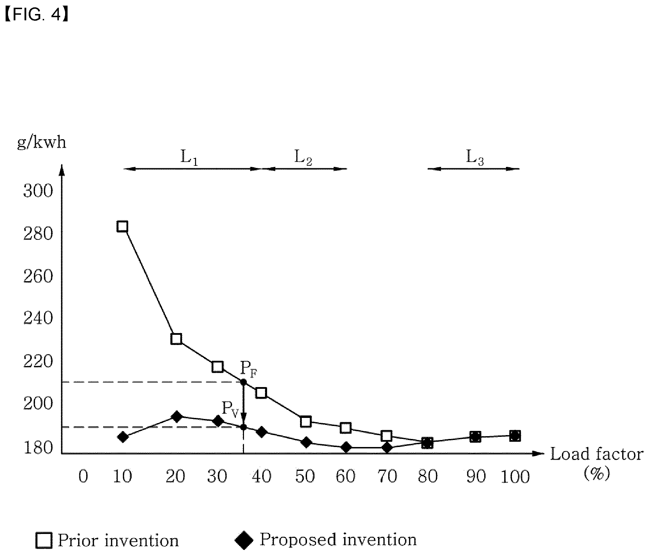

In contrast, in the power supply system 1 of FIG. 4, most of the variable load of the LNG carrier is separated from the power system 100, and thus a change in load factor by the variable load of the service load power system 200 does not affect the essential load of the essential load power system 100.

Meanwhile, since most of the load of the service load power system 200 is a variable load having a variable load factor, the variable RPM power generator drives as the variable RPM power generator variably operates with the change in load factor.

As described above, when the rotational speed of the power generator is controlled to RPM having the optimal power generation efficiency for each load section through the variable RPM power generator of the variable load power system, it is possible to improve the fuel efficiency of the power generator which supplies power to the variable load, compared to the case of the continuous load and the variable load put together in the single system.

FIG. 4 is a diagram showing a relationship between the load factor of the load terminal in the power system and the fuel consumption amount of the power generator which supplies power to the load terminal.

As described above, the prior single power system supplies power to a variable load (for example, the reefer container) using a fixed RPM power generator. The load factor of the entire reefer container has 30-40% of the maximum power consumption on the average. When power is supplied to the entire reefer container using the fixed RPM power generator as conventionally, fuel of about 216 g/kwh is consumed on the basis of the load factor of 35% (the point P_{F} in FIG. 4). In contrast, according to an embodiment of the present disclosure, power may be supplied to a variable load using a variable RPM power generator. When power is supplied using a variable RPM power generator as in an embodiment of the present disclosure, fuel of about 190 g/kwh is consumed on the basis of the same load factor of 35% (Pv in FIG. 4).

As a result, the power supply system 1 of FIG. 3 has an improvement effect of the fuel consumption ratio by about 13% in generating the same power.

Accordingly, in a container ship using Marin Gas Oil (MGO) of $640/ton as fuel, when calculating with the fuel consumption improvement being simplified as 10%, the fuel cost saving effect of OPEX USD 2,4000/year (= USD 9,636/day × improvement efficiency (10%) × number of sailing days (generally 250 days)) may be obtained.

Further, when the service load is configured to have a load section in which the load factor varies over time, it is possible to further improve the power generation efficiency by controlling the rotational speed of the power generator to RPM having the optimal power generation efficiency for each load section.

In the ship load, the low load section L1 is a section in which the load factor is 10-40%, and has the fuel consumption amount of about 285-210 g/kwh. The medium load section L2 is a section in which the load factor is 40-60%, and has the fuel consumption amount of about 210-194 g/kwh. The high load section L3 is a section in which the load factor is 80-100%, and has the fuel consumption amount of about 185-190 g/kwh. The power supply system 1 of FIG. 3 has nearly similar fuel consumption to the power supply system of FIG. 1 in the high load section L3. However, in the low load section L1, the fuel consumption ratio per kwh is improved by about 6-10% compared to FIG. 1, and in the medium load section L2, the fuel consumption ratio per kwh is improved by about 10-35% compared to FIG. 1.

As described above, the variable RPM power generator of the service power system 200 of FIG. 3 may improve the power generation efficiency of the power generation unit 210 by controlling the RPM based on the load factor of each load section.

Meanwhile, when the service load power system 200 performs AC power distribution, the switchboard 230 may be configured to have a specific frequency (for example, 50 Hz or 60 Hz). In this case, the power generation unit 210 is configured to generate AC power based on the load factor of each load section, and output an AC electrical signal having the frequency (for example, 50 Hz, or 60 Hz) that matches the frequency of the switchboard 230.

In an embodiment, the power generation unit 210 includes an AC/AC converter (not shown) disposed between the power generator 211 and the switchboard 230. The AC/AC converter (not shown) is configured to convert the frequency of the AC electrical signal generated by the variable RPM power generator to the specific frequency (for example, 50 Hz or 60 Hz) of the switchboard 230.

As a result, even though there is a RPM change of the variable RPM power generator 211 based on the load factor of each load section, the power generation unit 210 may output an AC electrical signal having the specific frequency of the switchboard 230.

The fuel improvement effect described with reference to FIG. 4 is described with regard to the service load power system 200, but is not limited thereto.

As described above, the essential load unit 150 may include a VFD based load to control the temperature, pressure and cooling water in relation to the navigation of the ship. For the control of the temperature, pressure and cooling water, the load factor of the VFD based load may change. Accordingly, the VFD based load has a variety of load sections according to the navigation characteristics of the ship.

In another embodiment, when the ship is any other type of ship (for example, an LNG ship) than a container ship, the variable RPM power generator may be included in the essential load power system 100. When the ship to which the power supply system 1 for ships is applied is not a container ship, a ratio of the variable load in the service load may be lower. Additionally, when a plurality of VFD based loads is installed in the ship, the essential load power system 100 may be treated as a variable load power system by a relative relationship.

When power supply is performed by the variable RPM power generator in the essential load power system 100, the variable RPM power generator is connected with the VFD based load of the essential load unit 150.

As described above, when the rotational speed of the power generator is controlled to RPM having the optimal power generation efficiency for each load section through the variable RPM power generator of the essential load power system 100, it is possible to improve the fuel efficiency of the power generator which supplies power to the variable load, compared to the case of the continuous load and the variable load put together in the single system. This is similar to the embodiment of the service load power system 200 described above, and its detailed description is omitted herein.

Further, since the power supply system 1 for ships enables low voltage power distribution, the distribution method in each power system 100, 200 may be configured to enable low voltage DC power distribution and/or low voltage AC power distribution.

In an embodiment, when the load in the ship has AC voltage as the rated voltage, a partial power distribution structure is configured, in which DC power distribution is performed in the switchboard part.

When DC power distribution is performed, it is possible to prevent power losses caused by frequency and phase synchronization and reactive power.

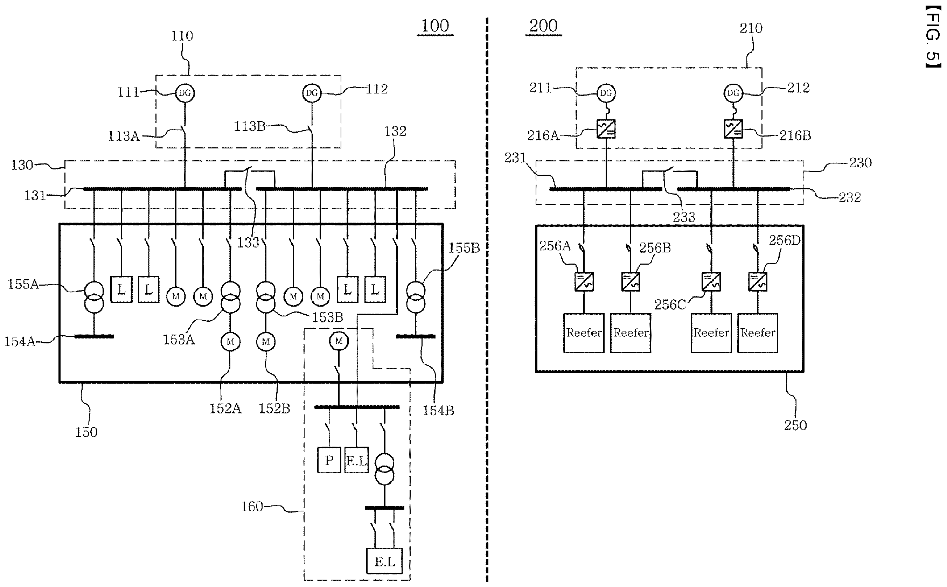

FIG. 5 is a schematic system architecture diagram of the power supply system for ships configured with AC power distribution for the essential load power system and DC power distribution for the service load power system, in an embodiment according to the first aspect of the present disclosure.

Referring to FIG. 5, it is further configured to enable DC power distribution in the service load power system 200. In this case, the power generators 111, 112 may be fixed RPM power generators, and the power generators 211, 212 may be variable RPM power generators.

In an embodiment, the power generation unit 210 may further include an AC/DC converter 216 to receive an AC electrical signal and convert to a DC electrical signal, and the second load unit may further include a DC/AC inverter 256 to receive a DC electrical signal and convert to an AC electrical signal.

As shown in FIG. 5, when the power system 200 includes two power generators 211, 212, the power system 200 may include two AC/DC converters 216A, 216B electrically connecting the power generators 211, 212 to the switchboard 230 respectively, and a plurality of DC/AC inverters 256A to 256D electrically connecting the switchboard 230 to each service load. By the AC/DC converter 216 and the DC/AC inverter 256, the power system 200 enables DC power distribution in the switchboard 230 part.

The voltage applied to the switchboard 230 in the service load power system 200 may be set for appropriate DC power distribution, and may be different from the voltage applied to the switchboard 130 in the essential load power system 100. For example, voltage of 440 V may be applied to the switchboard 130, while voltage of 690 V may be applied to the switchboard 230 in which partial DC power distribution is performed.

As described above, the power supply system 1 may be configured with fixed RPM power generator based AC power distribution for the essential load power system and variable RPM power generator based DC or AC power distribution for the service load power system.

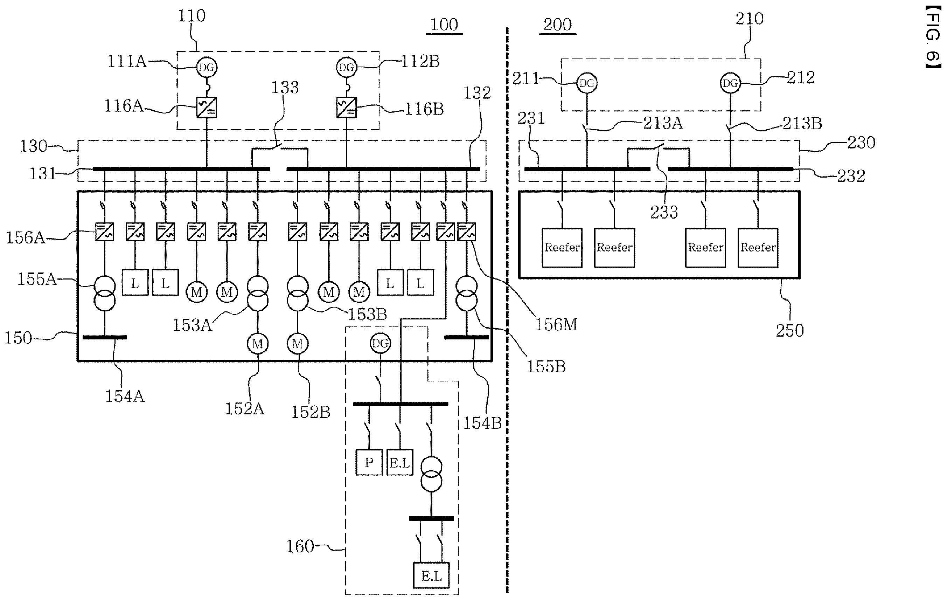

FIG. 6 is a schematic system architecture diagram of the power supply system for ships configured with DC power distribution for the essential load power system and AC power distribution for the service load power system, in another embodiment according to the first aspect of the present disclosure.

Referring to FIG. 6, it is further configured to enable DC power distribution in the essential load power system 100. In this case, the power generators 111, 112 may be variable RPM power generators, and the power generators 211, 212 may be fixed RPM power generators.

In an embodiment, the power generation unit 110 may further include an AC/DC converter 116 to receive an AC electrical signal and convert to a DC electrical signal, and the second load unit may further include a DC/AC inverter 156 to receive a DC electrical signal and convert to an AC electrical signal.

As shown in FIG. 6, when the power system 100 includes two power generators 111, 112, two AC/DC converters 116A, 116B may be included to electrically connect the power generators 111, 112 to the switchboard 130 respectively, and a plurality of DC/AC inverters 156A to 156M to electrically connect the switchboard 130 to each essential load. By the AC/DC converter 116 and the DC/AC inverter 156, the power system 100 enables DC power distribution in the switchboard 130 part.

As described above, the power supply system 1 may be configured with variable RPM power generator based AC or DC power distribution for the essential load power system 100, and fixed RPM power generator based AC power distribution for the service load power system 200.

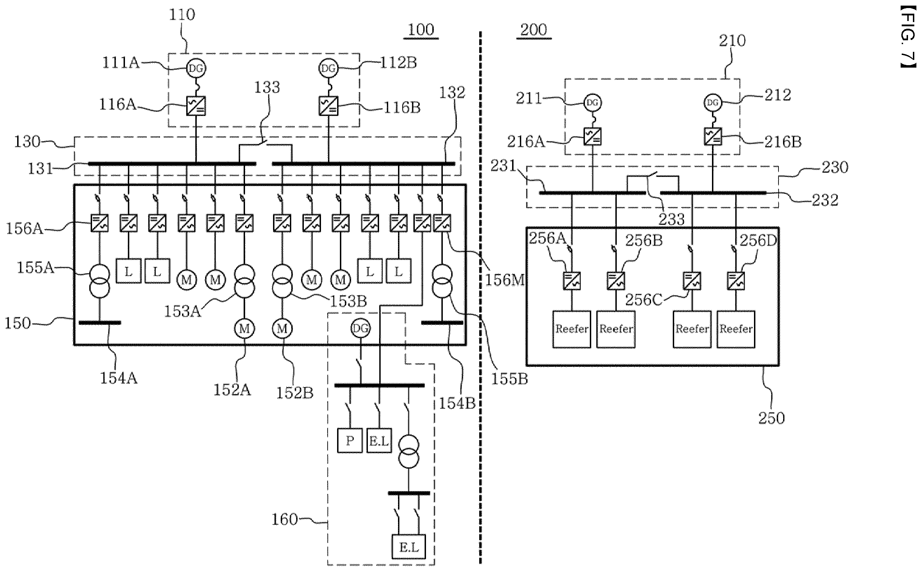

FIG. 7 is a schematic system architecture diagram of the power supply system for ships configured with DC power distribution for the essential load power system and the service load power system, in still another embodiment according to the first aspect of the present disclosure.

In an embodiment, both the essential load power system 100 and the service load power system 200 may be configured to enable DC power distribution. In this case, the service load power system 200 is similar to the service load power system 200 of FIG. 5 and the essential load power system 100 is similar to the structure of the essential load power system 100 of FIG. 6, and thus its detailed description is omitted herein.

In addition, the power systems 100, 200 may be efficiently configured in the component provision aspect.

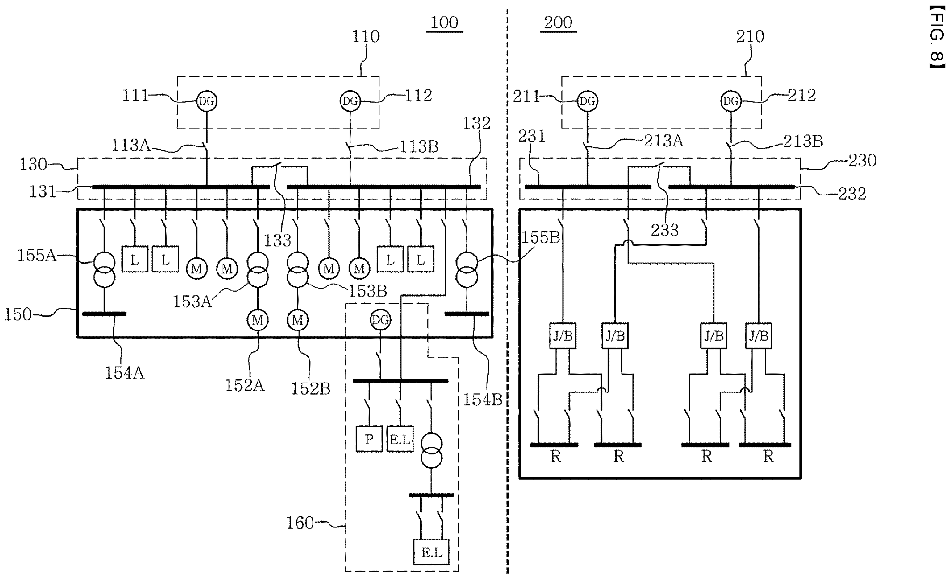

FIG. 8 is a schematic system architecture diagram of the power supply system for ships configured with fixed RPM based AC power distribution for the essential load power system and the service load power system, in yet another embodiment according to the first aspect of the present disclosure.

The power supply system of FIG. 8 is similar to the configuration of the power supply system of FIG. 3, and will be described based on differences.

The power supply system 1 for ships may be configured such that the power generation unit 110 of the essential load power system 100 and the power generation unit 210 of the service load power system 200 are driven at the fixed RPM to generate power in the component provision aspect.

Referring to FIG. 8, the service load power system 200 includes a power generation unit 210, a low voltage switchboard 230 and a service load unit 250.

Due to the system separation, the switchboard 230 performs low voltage power distribution. When the switchboard 230 distributes AC power, the frequency of the switchboard 230 is a specific frequency (for example, 50 Hz or 60 Hz).

In some embodiments, the switchboard 230 may include a plurality of buses. For example, the switchboard 230 includes two buses 231, 232 as shown in FIG. 8. In this case, the switchboard 230 may further include a bus tie breaker 233 which electrically connects the plurality of main buses 231, 232 in normal condition, but shuts off the electrical connection in case of emergency and/or accidents.

The power generation unit 210 is configured to generate power having the frequency (for example, 50 Hz, or 60 Hz) that matches the frequency of the switchboard 230. For example, the power generation unit 210 may include a fixed RPM power generator which drives at the fixed RPM for the frequency that matches the frequency of the switchboard 230.

In some embodiments, the power generation unit 210 may include a plurality of fixed RPM power generators 211, 212. The power generation capacity of the fixed RPM power generators 211, 212 may be equal to or higher than the power generation capacity of the service load 250. The fixed RPM power generator 211 or 212 has a sufficient power generation capacity to supply power to the service load power system 200 in the medium or low load section.

The service load unit 250 may include a load (for example, a reefer container) of which the load factor does not rapidly change. In the power supply system 1 for ships, the service load power system 200 operates the buses 231, 232 as a closed-bus in the medium or low load section, so that one of the two power generators supplies power to the service load unit 250.

The service load power system 200 may further include at least one power transfer element between the low voltage switchboard 230 and the service load unit 250 to supply the power of the switchboard 230 to the service load unit 250.

The power transfer element may include, for example, a transformer and an intermediate junction box (J/B) as shown in FIG. 8, but is not limited thereto, and the prior power system including the fixed RPM power generator may include a variety of power transfer elements connecting the low voltage switchboard to the load.

Due to the frequency matching structure between the power generation unit 210 and the switchboard 230, the service load power system 200 may perform low voltage AC power distribution in the switchboard 230 without requiring an additional power device (for example, a power converter) for frequency matching between the low voltage switchboard and the power generation unit.

For example, the power generator 211 or 212 of the service load power system 200 is a variable RPM power generator, and may generate power having the frequency in the variable frequency range (for example, 37 Hz to 60 Hz) according to the speed. In this case, a power converter (for example, a Matrix Converter) is required between the switchboard 230 having a specific frequency (for example, 50 Hz or 60 Hz) and the variable RPM power generator 211 to convert the frequency of the power outputted from the power generation unit 210 to the frequency of the switchboard 230 for frequency matching, and it is not easy to provide high capacity converters for converting the power generation capacity (for example, 3 MW) of power generators used in ships. Further, the price of variable RPM power generators is generally higher than the price of fixed RPM power generators.

As a result, the service load power system 200 of FIG. 8 may maintain the advantages of low voltage power distribution, and construct the low voltage power distribution based power supply system in the ship at lower costs without requiring an additional power device (for example, a power converter) for frequency matching between the low voltage switchboard 230 and the variable RPM power generation unit 210, required when the variable power generator is applied. Further, it is possible to configure parts of the service load power system 200 on the basis of the prior available fixed RPM power generation, thereby making it easy to design.

As described above, the power supply system 1 for ships according to the embodiments of the present disclosure is configured such that the power system is separated into the power system for essential load and the power system for service load according to the characteristics of the ship electrical loads.

As a result, the stability of each system increases. When a system accident occurs in the service load terminal, since the prior system is configured as a single system, the essential load is affected. In case that the system is separately configured, when an accident occurs in the service load terminal, the corresponding system accident spreads only in the power system for service load and does not affect the power system for essential load. Likewise, in case that the system is separated, when an accident occurs in the essential load terminal, the corresponding accident does not spread to the service load terminal.

Additionally, the individual power system is smaller in scale than the single power system. For example, in the case of the single power system having 14 MW power capacity, the scale of the essential load power system 100 is 9 MW and the scale of the service load power system 200 is 5 MW, and when separated as shown in FIG. 3, the scale of the individual power system is reduced from 14 MW to 9 MW, and from 14 MW to 5 MW respectively.

Additionally, it is possible to supply power through the main switchboard to which low voltage (for example, 440 V) is applied instead of high voltage of 6.6 kV or more. Accordingly, the high capacity step-down transformer 40 of FIG. 1 is not required any longer. Accordingly, it is possible to achieve cost savings of about 250 million per ship in terms of Capital expenditures (CAPEX).

Further, it is possible to use the space occupied by the step-down transformer 40 of FIG. 2 (i.e., the prior transformer room) 1007 more efficiently.

Referring back to FIG. 2, when the power supply system 1 of FIG. 3 is applied to a container ship, the space of the transformer room 1007 in which eight step-down transformers 40 may be positioned may be further used for shipping of containers.

The commonly used standard container is a twenty-foot equivalent unit (TEU) container having the dimensions of 6.058 m × 2.591 m × 2.438 m. When calculating the number of containers that can be loaded in the space of two transformer rooms having the dimensions of 13.25 m × 6.06 m × 6.62 m using the TEU container as the standard reference, a maximum of 26 (= 13 X 2) TEU containers may be loaded on the prior transformer room 1007. That is, the ship having the power supply system 1 for ships of FIG. 3 may additionally load a maximum of 26 TEU containers, compared to the prior container ship having the power supply system for ships of FIG. 1. In some embodiments, it is possible to additionally load about 20 (= 10 X 2) containers even though an extra space for the task of loading and unloading containers is taken into account.

Additionally, unless the step-down transformer is used, it is possible to load more containers on the space associated with the use of the step-down transformer. For example, a predefined structure might have been installed due to the presence of the transformer 40 on the deck surface disposed vertically in the prior transformer room 1007. However, since the transformer 40 is unnecessary, the predefined structure may be also unnecessary, and thus additional containers may be vertically loaded on the deck surface. In this case, when 5 (horizontal) x 10 (vertical) containers are additionally loaded on the deck surface, it is possible to additionally load 100 containers.

Accordingly, as the step-down transformer 40 is not used, a maximum of about 120 containers may be additionally loaded on the ship 1000. The number of containers additionally loaded on the space of the transformer room 1007 is provided by way of illustration, and 120 or more containers may be additionally loaded according to the type of the container and the size of the transformer and the transformer room.

Further, due to the application of the power supply system 1 for ships of FIG. 3, an object pre-positioned in a space other than the transformer room 1007 may be moved to the space of the transformer room 1007. In this case, due to the movement of the pre-positioned object, the space in which the object was originally disposed becomes an empty space. The container may be additionally positioned in the additionally created empty space instead of being directly loaded on the space of the transformer room 1007.

Alternatively, the space of the transformer room may be used for various purposes other than container shipping.

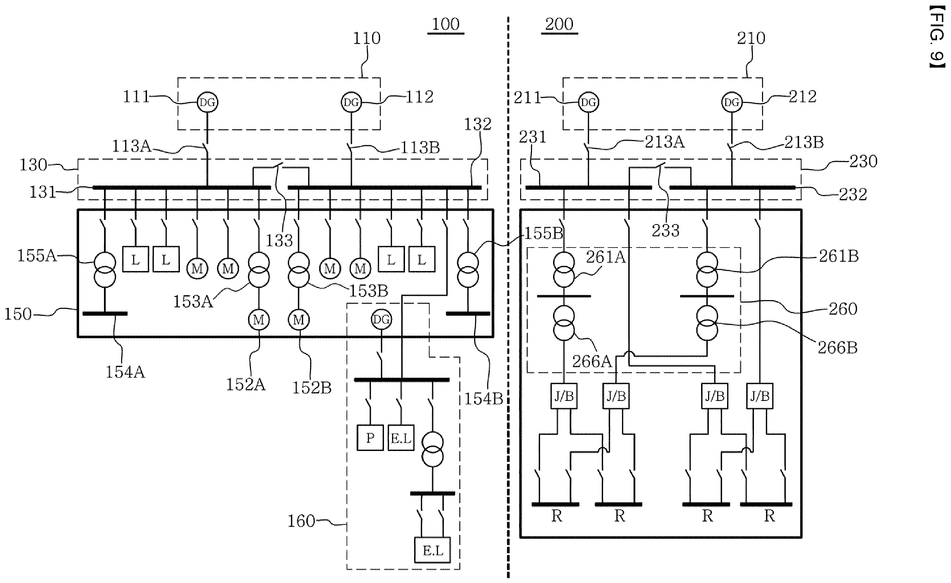

FIG. 9 is a schematic system architecture diagram of the power supply system for ships for use of the space of the transformer room for any purpose other than container shipping, in further another embodiment according to the first aspect of the present disclosure.

The service load power system 200 of FIG. 9 is similar to the service load power system 200 of FIG. 8, and will be described based on differences.

Referring to FIG. 9, the service load power system 200 includes a transformation unit 260 to transform the voltage between the switchboard 230 and the reefer panel R. In an embodiment, the transformation unit 260 includes a step-up transformer 261 and a step-down transformer 266.

The step-up transformer 261 is installed between the low voltage switchboard 230 and the reefer panel R of the fore part. The step-up transformer 261 is configured to receive the low voltage power of the switchboard 230, and output the power having voltage (for example, 1.5 kV to 6.6 kV) that is higher than the voltage of the switchboard 230.

The step-down transformer 266 is configured to receive the high voltage power outputted from the step-up transformer 261 and output the power having lower voltage. The output power of the step-down transformer 266 is supplied to the reefer container connected to the reefer panel R of the fore part.

In some embodiments, the service load power system 200 includes a plurality of step-up transformers 261 and a plurality of step-down transformers 266 to connect each power path between each reefer panel R of the fore part and the switchboard 230. For example, as shown in FIG. 9, the service load power system 200 includes two step-up transformers 261A, 261B and two stepdown transformers 266A, 266B.

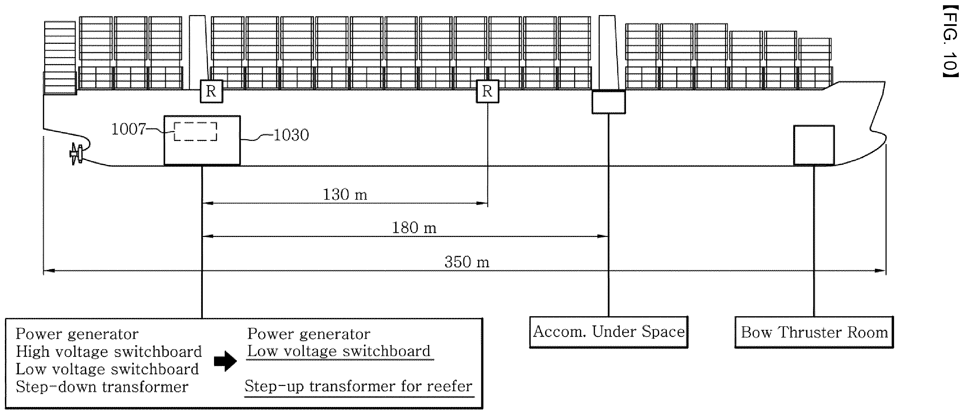

FIG. 10 is a side structure diagram of the ship to which the power supply system of FIG. 9 is applied.

The container ship including the reefer container generally includes four reefer panels R. Two reefer panels R are positioned at the fore part, and two reefer panels R are positioned at the aft part. The power supply to the reefer container is performed through the reefer panel R for each section in the power generation unit 210 and the switchboard 230 disposed in the aft engine room 1030.

The distance from the low voltage switchboard 230 positioned in the engine room 1030 to the two reefer panels R disposed at the fore part relies on the scale of the ship, but is generally a few hundreds of meters. To supply the power at low voltage from the switchboard 230, to which low voltage is applied, to the reefer panel of the fore part, a considerable quantity of cables is required to connect them.

Referring to FIG. 10, in the ship (for example, the container ship) having the total length of 350 m, the distance between the engine room 1030 of the aft part in which the switchboard 230 is disposed and the reefer panel R of the fore part that transm its power to the reefer container of the fore part is about 120-130 m. When the step-up transformer 261 is not used, about 10-15 strands of 237A cable having 120 SQMM cross section are required.

In contrast, using the step-up transformer 261, it is possible to achieve the long distance power supply of a few hundreds of meters using one strand of cable.

Additionally, although the service load power system 200 further includes the step-up transformer 261 and/or the step-down transformer 266, the step-up transformer 261 and/or the step-down transformer 266 is positioned in the ship not to reduce the scale of cargo loaded on the ship (for example, the reefer container).

In an embodiment, the step-up transformer 261 may be installed in the main transformer room 1007 in which the step-down transformer of the prior single power system is installed. As the separation of the power system reduces the load capacity in one power system, the step-up transformer 261 is smaller than the step-down transformer. Additionally, it is possible to load additional cargo such as containers in the remaining space not occupied by the step-up transformer 261.

Additionally, the step-down transformer 266 is positioned at a location where a considerable weight of cable is not required even though power is supplied to the reefer panel R of the fore part at low voltage, while not affecting the scale of the cargo loaded on the ship. For example, the step-down transformer 266 may be positioned in the Accomm under space in which cargo is not positioned.

As shown in FIG. 10, in the ship (for example, the container ship) having the total length of 350 m, the distance from the engine room 1030 including the transformer room 1007 to the Accomm under space is about 180 m. When the step-up transformer 261 outputs high voltage power from low voltage (for example, 440 V) power of the switchboard 230, power may be supplied to the reefer panel R of the fore part using a smaller quantity of cable (for example, one strand of cable having the cross section of 120 SQMM).

As described above, using the service load power system 200 of FIG. 9, it is possible to reduce the cable weight to the reefer panel R of the fore part, and ease the cable installation.

The placement of the step-up transformer 261 and/or the step-down transformer 266 is not limited to the above-described spaces, and they may be positioned in other space within the ship, where the scale of cargo loaded on the ship does not reduce.

In addition, the power supply system 1 for ships may be configured such that the thruster motor 152 and the essential load power system 100 are not connected to each other.

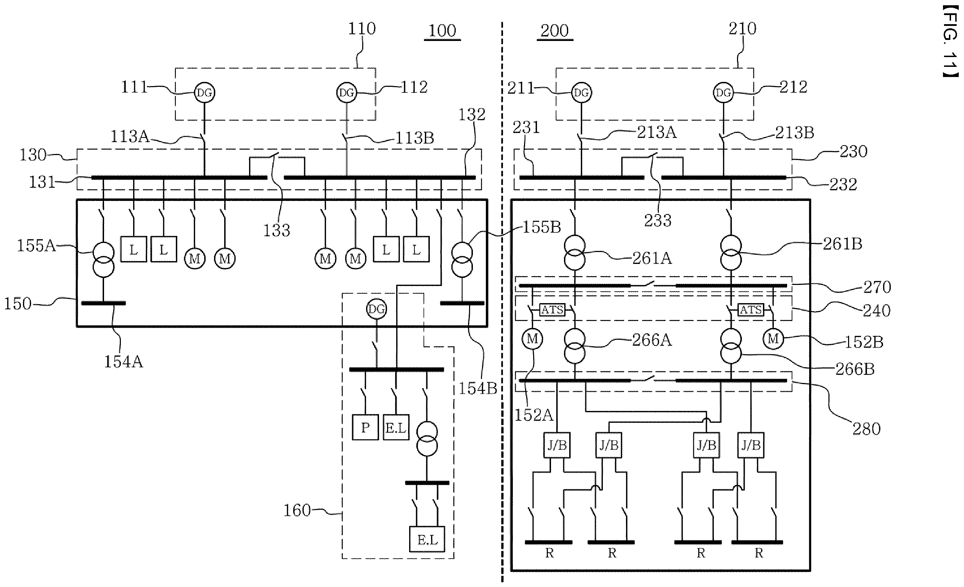

FIG. 11 is a schematic system architecture diagram of the power supply system for ships including the separated power system, in an embodiment according to the first aspect of the present disclosure.

The power supply system 1 of FIG. 11 is similar to the configuration of the power supply system 1 of FIG. 9, and will be described based on differences.

In FIG. 9, the power generation capacity of the essential load power system 100 connected to the thruster motor 152 is set based on both the power capacity of the thruster motor 152 and the power capacity of the continuous load required to continuously supply the power, defined as the essential load by the marine vessel rules. The thruster motor 152 is only driven for a short time when entering/leaving the port, but it is because the thruster motor 152 is a high capacity load essential for navigation of the ship.

As described above, when the thruster motor 152 is connected to the essential load power system 100 including most of the continuous load, the essential load power system 100 has a considerable difference between the power generation capacity and the power consumption capacity of the load during most of the sailing time of the ship during which the thruster motor 152 does not operate. That is, it is necessary to install a power generator with over-specifications beyond the power generation capacity substantially required for the essential load power system 100, which requires higher power generator costs than the substantially required power generator costs.

In an embodiment, the thruster motor 152 is connected to the service load power system 200 which is a power system other than the essential load power system 100, and is configured not to consider the power capacity of the thruster motor 152 in the setting of the power generation capacity of the essential load power system 100. Additionally, the service load power system 200 uses the power in an alternating manner for a short time during which the thruster motor 152 operates, not to increase the additional power generation capacity, though the service load power system 200 is connected to the high capacity load (i.e., the thruster motor 152).

Referring to FIG. 11, the thruster motor 152 receives the power of the power generation unit 210 through the switchboard 230. The power generation unit 210 includes a fixed RPM power generator.

The thruster motor 152 is an important load that is important for ship navigation in the functional aspect, but corresponds to a secondary essential load that does not require the power supply continuously during ship navigation. Accordingly, even though the thruster motor 152 is not connected to the essential load power system 100 which continuously supplies power to the essential load, it does not greatly affect the ship navigation.

Additionally, the service load power system 200 includes a switching unit 240 to prevent the addition of the power generation capacity of the power generation unit 210 due to the additional connection of the thruster motor 152.

In an embodiment, the switching unit 240 includes an auto switch (hereinafter, "Interlock Switch") configured to interlock. The interlock switch is positioned between the switchboard 230 and the load of the service load power system 200 (i.e., including the thruster motor 152 and the service load unit 250). The interlocking switch is an auto switch that is automatically switched by the control unit of the ship.

As shown in FIG. 11, the interlock switch is installed between the power path to the thruster motor 152 or the power path to the service load unit 250, to perform an interlocking operation for allowing the power supply to any one load terminal (for example, the thruster motor 152 terminal) and disallowing the power supply to the other load terminal (for example, the service load unit 250).

Additionally, the step-up transformer 261, the step-down transformer 266, and a first sub-switchboard 270 and a second sub-switchboard 280 as sub-switchboards of the switchboard 230 may be included to efficiently perform the long distance power supply between the switchboard 230 and the thruster motor 152 and the reefer panel R disposed at the fore part of the ship through a smaller number of cables.

The step-up transformer 261 is positioned between the switching unit 240 and the switchboard 230 to receive low voltage power (for example, 440 V power) of the switchboard 230 and output high voltage power (for example, 6.6 kV power). The high voltage power of the step-up transformer 261 is transmitted to the thruster motor 152 or the service load unit 250 through the switching path of the first sub-switchboard 270 and the switching unit 240.

When the thruster motor 152 does not drive (for example, during ordinary navigation of the ship), the switching unit 240 is switched to transmit the power of the power generation unit 210 to the service load unit 250 through the switchboard 230 and the first sub-switchboard 270. The high voltage power outputted from the switching unit 240 is transmitted to the second sub-switchboard 280, to which low voltage is applied, through the step-down transformer 266, and then to other load than the thruster motor 152.

When the thruster motor 152 drives, (for example, for about 30 min when the ship enters or leaves the port), the switching unit 240 is switched to transmit the power of the power generation unit 210 having the fixed RPM to the thruster motor 152 through the switchboard 230 and the first sub-switchboard 270.

By this switching structure, even when the thruster motor 152 is additionally connected to the service load power system 200, there is no additional increase in the power generation capacity of the service load power system 200.

Moreover, when the service load unit 250 includes the reefer container as the service load, stopping the power supply to the reefer container by the switching to the thruster motor 152 does not affect the function of the reefer container. In general, the reefer container maintains constant temperature even when the reefer container is not supplied with power for about 30 to 40 min.

Additionally, in the power supply to the thruster motor 152 disposed at the fore part and other load (for example, the reefer container), the power supply system 1 can obtain the cable reduction effect using the step-up transformer 261, described with reference to FIGS. 9 and 10.

In the case of a plurality of thruster motors 152, the service load power system 200 may be configured with a plurality of paths for power supply to each thruster motor 152.

For example, as shown in FIG. 11, when the thruster motors 152A, 152B are connected to the service load power system 200, a path for the thruster motor 152A and a path for the thruster motor 153A may be formed, and a plurality of step-up transformers 261A, 261B may be included for efficient power supply to the plurality of thruster motors 152A, 152B. Additionally, a plurality of step-down transformers 266A, 266B may be included to convert the high voltage power of the plurality of step-up transformers 261A, 261B to low voltage power.

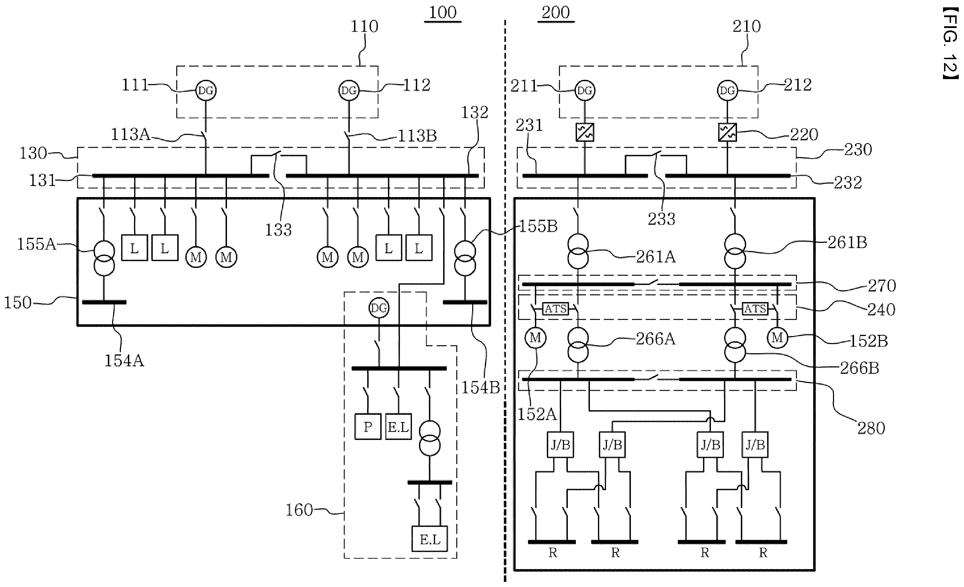

FIG. 12 is a schematic system architecture diagram of the power supply system for ships including the separated power system, according to another embodiment of the present disclosure.

FIG. 12 is a schematic system architecture diagram of the power supply system for ships including the separated power system, in another embodiment according to a first aspect of the present disclosure.

In an embodiment, in the power supply system 1 in which the thruster motor 152 is connected to a power system (for example, the service load power system 200) other than the essential load power system 100, the service load power system 200 supplies power to the thruster motor 152 or the service load 250 using a variable RPM power generator.

Referring to FIG. 12, the power generation unit 210 includes the variable RPM power generator 211. Additionally, the service load power system 200 may include a power converter 220 for frequency matching between the variable RPM power generator 211 and the switchboard 230. In this case, the power generation efficiency may be increased by controlling the driving speed of the power generator 211.

As shown in FIGS. 11 and 12, the power supply system 1 may connect the thruster motor 152 to the power system other than the essential load power system 100, and configure the fixed or variable RPM power generator according to the characteristics of the load terminal in the service load power system.

Meanwhile, the power supply system 1 described with reference to FIGS. 11 and 12 may be modified and embodied in various forms.

In an embodiment, in the similar way to FIG. 8, the service load power system 200 is configured to enable low voltage power distribution from the switchboard 230 to the service load 250. Additionally, the service load power system 200 is configured such that the thruster motor 152 receives the power from the switchboard 230 through the step-up transformer 261 and/or a Starter Panel (S/T).

In another embodiment, the service load power system 200 may include the step-up transformer 261 and/or the starter panel between the switchboard 230 and the thruster motor 152 for the power supply to the thruster motor 152, and may include a step-up transformer (not shown) that is separate from the step-up transformer 261 and the step-down transformer 266 between the switchboard 230 and the service load unit 250 for the power supply to the service load unit 250.

In addition, the power supply system 1 may control the driving of the power generator and adjust the amount of power supplied to the load unit according to the time interval (or the operation mode). For example, when the essential load unit 150 of the power system 100 does not need the power generation capacity of the two power generators 111, 112, the power supply system 1 for ships may set at least one power generator (for example, the power generator 111) to a standby power generator to stop the driving and supply the power to the essential load unit 150 and use for other purposes using the standby power generator, where necessary.

As described above, as opposed to the prior ship configured as a single power system for the essential load and the service load, the ship having the power supply system 1 separated into the essential load power system 100 and the service load power system 200 enables low voltage power distribution, thereby eliminating the need for high priced shutoff equipment for high voltage. Additionally, it is possible to solve the problem with reduced power generation efficiency or reduced space utilization in the ship. Although the system architecture and effect have been hereinabove described based on the container ship, it is obvious to those skilled in the art that the embodiments of the present disclosure are not limited to the container ship.

Hereinafter, other aspects of the present disclosure will be described in more detail with reference to LNG carriers and LPG carriers as different types of ships other than container ships.

First, the embodiments of the present disclosure about LNG carriers will be described below.

In general, LNG is stored in a specially fabricated cargo tank and transported by sea in a liquid state at a very low temperature (for example, -160°C). It is impossible to transport LNG by sea without controlling the temperature and pressure of the cargo tank during ordinary navigation.

Accordingly, an LNG carrier is configured to propel the ship and safely transport LNG by sea.

Electrical loads in the LNG carrier may include the essential loads relevant to navigation (for example, an essential load-fuel oil supply pump, a fuel valve cooling pump) and the service loads irrelevant to navigation (for example, a service load).

The essential load in the LNG carrier is an electric motor for propulsion and navigation, for example, a thruster motor, a propulsion motor, a cooling sea water pump and a lubricating oil pump. The service load in the LNG carrier includes an LNG storage load configured to allow the cooling and compression process system to operate according to the outside temperature of the pipeline and the cargo tank of the LNG carrier, and a load for LNG fuel for use of Boil-Off Gas (BOG) occurring from LNG as fuel.

The essential load and the service load of the LNG carrier may include a continuous load with constant power consumption during driving, and a variable load with varying power consumption amount depending on the driving characteristics. In general, the LNG carrier uses an AC power supply system and a continuous load and a variable load are put together and connected to a single power system.

In the case of the prior system, the essential load for propulsion and the service load such as an LNG storage load and a load for LNG fuel are configured as a single system, and thus the power capacity of the entire system is very high.

Accordingly, in the case of an LNG carrier to which a power system of a specific scale or more is applied, to solve the quantities of cables and system capacity limitations caused by the low voltage high current, inevitably, the LNG carrier has a power supply system which generates power at high voltage, converts it to low voltage and supplies the power to the load. That is, in the similar way to the prior container ship, the prior LNG carrier has a power supply system which supplies power through high voltage power distribution.

FIG. 13 is a diagram showing the system architecture of a power supply system for LNG carriers configured as a single system in which the essential loads and the service loads are put together, according to another embodiment of the related art.

Referring to FIG. 13, the prior power supply system for LNG carriers in which the essential loads and the service loads are put together in a single power system includes a high voltage power generation unit 10; a high voltage switchboard 21; transformers 31, 32, 33, 34 to decrease a high voltage electrical signal of the high voltage switchboard 21; low voltage switchboards 41, 42, 43; and a load unit 50 in which the continuous load and the variable load are put together.

As shown in FIG. 13, when the single system based power supply system for LNG carriers is applied to an LNG carrier, in case that the system scale is a predetermined size or more, even though the rated voltage of the load is low voltage, high voltage power distribution is applied for the main distribution, and when branching to subsystems to which the loads are connected, power is supplied through the step-down transformers 31, 32, 33, 34 which convert high voltage to low voltage.

When high voltage of 6.6 kV is applied to the switchboard 20 of FIG. 13, the power supply process to the load is as follows: 6.6 kV power generator -> 6.6 kV high voltage main switchboard -> 6.6 kV/440 V transformer -> low voltage sub-switchboard of 440 V or less. That is, the power supply system for LNG carriers of FIG. 13 generates power at high voltage, converts it to low voltage and supplies the power to the load.

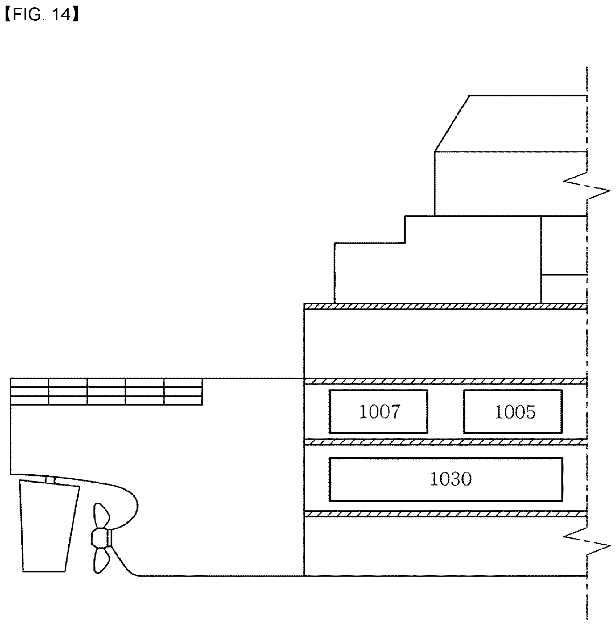

FIG. 14 is a diagram for describing the internal structure of the prior LNG carrier having the power supply system for LNG carriers of FIG. 13.

Referring to FIG. 14, the LNG carrier 1000 includes an engine room 1030. The engine room 1030 includes therein a variety of engine machine such as power generators and other machine connected to the engine machine, and includes an Engine Control Room (ECR) for controlling the engine and/or an ECR-switchboard room 1005 as a space in which the switchboard is positioned, and a transformer room 1007 as a space in which the step-down transformers 31, 32, 33, 34 are positioned.

As described above, the power system of FIG. 13, to which partial high voltage power distribution is applied, needs the high capacity step-down transformers 31, 32, 33, 34 to supply power to the load. Since high voltage power distribution is performed in the LNG carrier having the high capacity load, the transformer room 1007 in which the step-down transformers 31, 32, 33, 34 are positioned is very large in size.

As a result, the available space in the ship reduces as much as the space occupied by the plurality of step-down transformers (31, 32, 33, 34 in FIG. 13).

Additionally, the power supply system of FIG. 13 is configured as a single power system and thus has low performance in terms of power generation efficiency.

The power generator applied to the LNG carrier is generally a fixed RPM power generator. The fixed RPM power generator has high fuel efficiency when the fixed RPM power generator generates power such that the load factor is a value between about 75 and 85%.

Meanwhile, the power generation capacity of the fixed RPM power generator included in the power generation unit 10 is calculated based on the maximum load power of the continuous load and the variable load. Since most of the essential load of the LNG carrier is a continuous load, a change in the load factor of the essential load is not so large.

In contrast, most of the service load of the LNG carrier, performing the operation that is irrelevant to the propulsion of the ship and relevant to LNG Tank Operation and LNG Fuel Supply, corresponds to a variable load of which the load factor changes over time.

For example, the LNG carrier may include cargo part loads as the service loads. In the LNG carrier to which the system of FIG. 13 is applied, the load capacity of the entire cargo part is about 5.5 MW, and has a rapid load factor between about 30 and 100 for each operation mode.

Accordingly, the power supply system of FIG. 13, to which the fixed RPM power generator is applied, includes the service loads and the essential loads put together in a single system, and thus has the reduced power generation efficiency of the power supply system in the medium or low load section.

As a result, the prior LNG carrier also has the problem with reduced power generation efficiency or reduced space utilization in the ship.

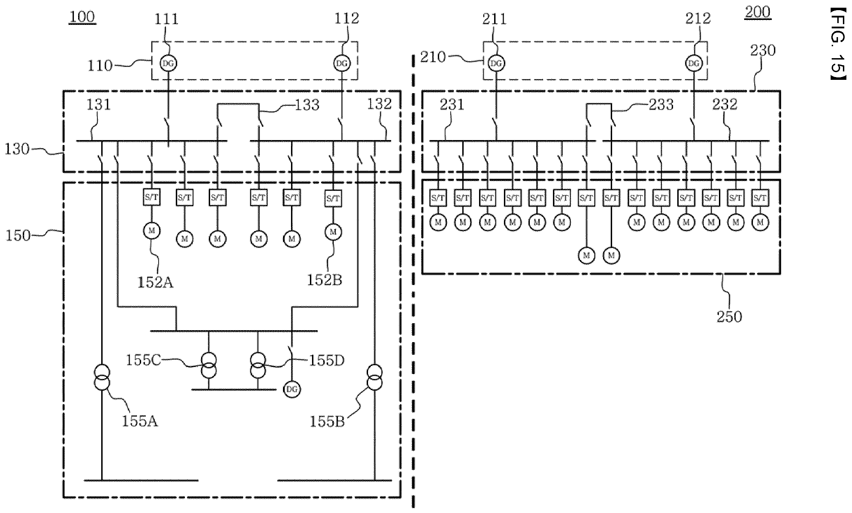

FIG. 15 is a schematic system architecture diagram of a power supply system for LNG carriers including a separated power system, in an embodiment according to a second aspect of the present disclosure.

Referring to FIG. 15, the power supply system 1 for LNG carriers includes at least one power system 100, 200. The power system 100 includes a power generation unit 110, a switchboard 130 including a main switchboard and an essential load unit 150 including the essential loads. The power system 200 includes a power generation unit 210, a switchboard 230 including a main switchboard and a service load unit 250 including a service load.

Additionally, the power supply system 1 for LNG carriers may further include a control unit (not shown) to monitor the condition of the power system and control the power supply. The control unit may include at least one of a Power Management System (PMS), an Energy Management System (EMS) or an Energy Power Management System (EPMS).

Hereinafter, for clarity of description, the power supply system 1 for LNG carriers is described as including two power systems 100, 200, but is not interpreted as being limited thereto. Additionally, in some cases, the detailed description of the two elements is made representative of a detailed description of one element.

As shown in FIG. 15, the power supply system 1 for LNG carriers is configured such that a power system is separated for each of the essential load and the service load.

The power generation unit 110 supplies power to the essential load unit 150 through the switchboard 130 to allow the load of the essential load unit 150 to consume the power and bring it into operation.

The power generation unit 110 outputs an AC electrical signal, and includes a plurality of power generators (for example, power generators 111, 112 of FIG. 15). The power generation type and the power generation capacity of the power generators 111, 112 rely on the load. For example, when the motor load for the operation of the LNG carrier is a constant output load, an AC power generator may be used. Additionally, when the capacity factor of the power generator is 85% and the load capacity is 1 MW, the power generation capacity of the power generator may be about 1.2 MW.

The capacity of one power generator included in the power generation unit 110 has a sufficient capacity to supply power to the essential load unit 150 in an ordinary navigation mode. In this case, at least one of the plurality of power generators 111, 112 is designated as a standby power generator, and the standby power generator is set not to operate during ordinary navigation.

In an embodiment, when an accident occurs in the power generator (for example, 111) which is operating in the essential load power system 100, the power supply system 1 is configured to supply the power from the standby power generator (for example, 112) included in the essential load power system 100 to the essential load unit 150.

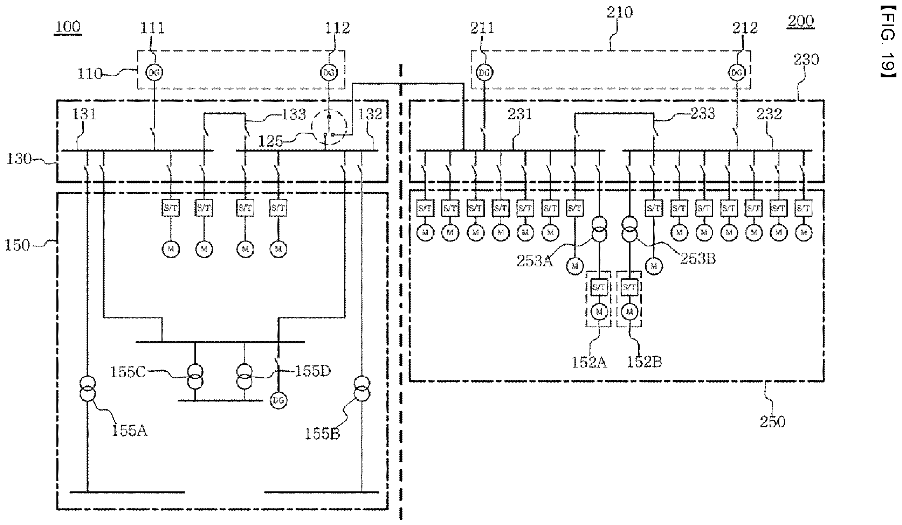

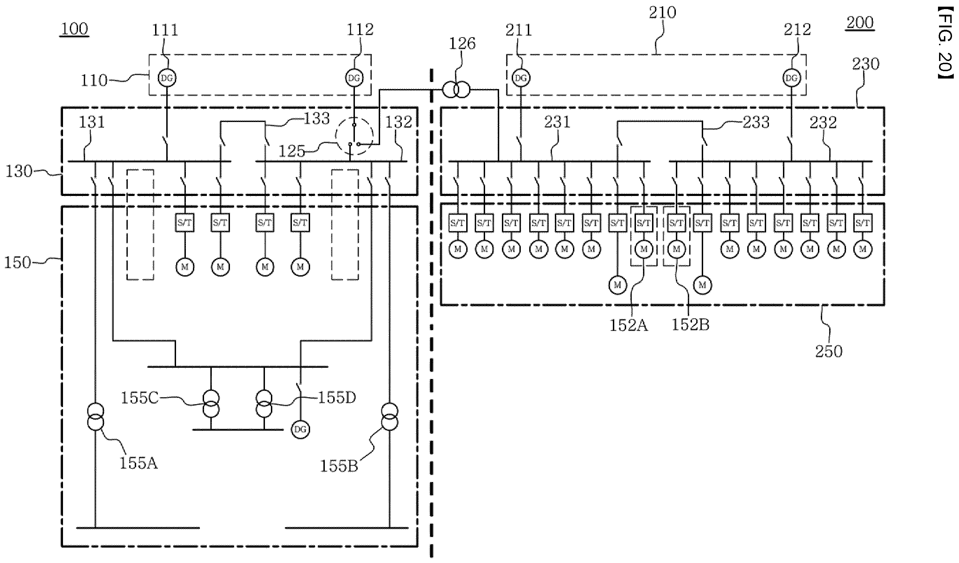

In an embodiment, the standby power generator of the essential load power system 100 may operate to supply power to the service load of the service load power system 200. It will be described in more detail with reference to FIGS. 19 and 20 as below.

The power generators 111, 112 may include diesel generators, hybrid fuel power generators, gas fuel power generators and gas turbines, but not limited thereto. Additionally, the power generation unit 110 may further include at least one switch and/or disconnector to control the power supply according to situations. For example, as shown in FIG. 15, when the power supply system 1 for LNG carriers includes two power generators 111, 112, the power supply system 1 for LNG carriers may further include two switches.

The switchboard 130 performs AC power supply. In an embodiment, the switchboard 130 may include a main switchboard of the power system 100. The main switchboard may include a bus cable, and in this case, the bus cable may be referred to as a main bus.

Additionally, in some embodiments, the switchboard 130 may include a plurality of bus cables. For example, the switchboard 130 may include a plurality of bus cables such as a main bus 131 electrically connected to the power generator 111 and a main bus 132 electrically connected to the power generator 112. In this case, the switchboard 130 may further include a bus tie breaker 133 which electrically connects the plurality of main buses 131, 132 in normal condition, but shuts off the electrical connection in case of emergency and/or accidents.

As low voltage may be applied to the switchboard 130, the power system 100 enables low voltage power distribution. For example, power may be supplied to the load by the application of low voltage of 440 V to the main bus 131 and the main bus 132 of FIG. 15.

The elements of the power system 100 may be electrically connected to each other for their interaction. For example, the power supply system 1 for LNG carriers may supply power to the essential load using a power supply line electrically connecting from the power generation unit 110 to the essential load unit 150 through the switchboard 130.

The essential load unit 150 of the power system 100 includes the essential loads essentially required to operate for ship navigation. The essential load includes the essential load defined by the marine vessel rules and a secondary essential load (for example, an important load) which is essentially required to operate for ship navigation, but not included in the essential load according to the marine vessel rules.

The essential load used for the operation of the LNG carrier may include, for example, a propulsion motor, a ballast pump, a lubricating oil pump, an engine fuel supply pump, a cooling pump and a water spray pump, but is not limited thereto. Most of the essential load included in the essential load unit 150 corresponds to a continuous load having a nearly invariable load factor.

In some embodiments, the essential load unit 150 may further include a VFD based load. The VFD based load is the essential load which optimizes the power consumption of the load terminal according to the navigation characteristics, such as a Central Cooling System. For example, the VFD load includes the essential load configured to control the temperature and pressure of the cooling pump configured to control the temperature of cooling water.

As described above, the switchboard 130 is configured to perform low voltage power distribution. Accordingly, as shown in FIG. 15, at least some essential loads may be supplied with power via electrical connection without a separate transformer.

Additionally, the essential load unit 150 may include at least one sub-switchboard to supply power at voltage equal to or lower than the voltage of the switchboard 130. In this case, the essential load unit 150 may further include a transformer 155 positioned between the switchboard 130 and the sub-switchboard to decrease the voltage. For example, as shown in FIG. 2, the essential load unit 150 may include transformers 155A, 155B, 155C, 155D between the switchboard 130 (for example, to which 450 V is applied) and the sub-switchboard (for example, to which 220 V is applied).

The transformer 155 is a transformer which decreases the voltage (for example, to 220 V), and has minimized transformation specifications compared with the step-down transformers 31, 32, 33, 34 of FIG. 13 that convert high voltage to low voltage.

Additionally, the power system 100 may further include an emergency power generator to supply power in emergency situations such as blackouts and an emergency switchboard including a load which operates in that time. The emergency switchboard may include shore power and emergency load.

The elements and operations of the power system 200 are similar to the elements and operations of the power system 100 in a significant part, and will be described based on differences.

In contrast, the service load unit 250 of the power system 200 includes the service loads additionally used for other purposes than the navigation of the LNG carrier. Additionally, the variable load unit 250 may further include at least one sub-switchboard (not shown) to supply power at lower voltage than the switchboard 230.

The service load unit 250 includes an LNG storage load used to store LNG and a user convenience load used for convenience of passengers of the LNG carrier.

LNG is a flammable material, and the LNG carrier needs to control the temperature and pressure of the cargo tank or the pipeline to easily load or unload LNG. Additionally, to safely transport LNG by sea, it is necessary to continuously control the temperature and pressure of the cargo tank even during ordinary navigation.

Accordingly, the LNG storage load including a load which operates for loading, unloading and storing LNG in the LNG carrier and a load which operates for managing the stored LNG during navigation (for example, LNG cooling and compression) corresponds to a variable load.

Additionally, the service load unit 250 may include a load for LNG fuel for use of Boil-Off Gas (BOG) as fuel.

LNG carriers are required to install and operate dual fuel engine systems in accordance with the environmental regulation. The dual fuel engine system may control at least part of the load for LNG fuel in Gas Mode or HFO Mode. Here, the Gas Mode is a mode in which BOG naturally occurring in the cargo tank and forcibly gasified BOG are used as fuels of LNG carriers, and the HFO Mode is a mode in which Heavy Fuel Oil (HFO) such as high sulfur fuel oils and bunker oils are used as fuels of LNG carriers.

Accordingly, the load for LNG fuel for use of BOG as fuel also corresponds to a variable load. Accordingly, most of the service load corresponds to a variable load having a variable load factor.

The LNG storage load includes, for example, a high duty (HD) compressor, a cargo pump and cargo auxiliary machine, but is not limited thereto.

The load for LNG fuel includes, for example, a low duty (LD) compressor and a vaporizer, but is not limited thereto.

Additionally, the variable load unit 250 may further include at least one sub-switchboard (not shown) to supply power at lower voltage than the switchboard 230.

In some embodiments, as shown in FIG. 15, at least some electrical loads of the essential load unit 150 or the service load unit 250 may include an element (for example, a Starter Panel (S/T)) which controls the amount of power received during the operation of the load.

Additionally, since each separated power system 100, 200 of the power supply system 1 for LNG carriers has an independent system configuration, it is possible to increase the stability of each system. When a system accident occurs in the service load terminal, since the prior system is configured as a single system, the essential load is affected. In case that the system is separately configured, when an accident occurs in the service load terminal, the corresponding system accident spreads only in the power system for service load, and does not affect the power system for essential load. Likewise, in case that the system is separated, when an accident occurs in the essential load terminal, the corresponding accident does not spread to the service load terminal.

Additionally, the individual power system is smaller in scale than the single power system. For example, in the case of the single power system having 14 MW power capacity, the scale of the essential load power system 100 is 9 MW and the scale of the service load power system 200 is 5 MW, and when separated as shown in FIG. 15, the scale of the individual power system is reduced from 14 MW to 9 MW, and from 14 MW to 5 MW respectively.

Additionally, it is possible to supply power through the main switchboard to which low voltage (for example, 440 V) is applied instead of high voltage of 6.6 kV or more. Accordingly, the high capacity step-down transformers 31, 32, 33, 34 of FIG. 13 are not required any longer. Accordingly, it is possible to obtain the cost saving effect in terms of CAPEX.

Further, as the high capacity step-down transformers 31, 32, 33, 34 are not required, the space occupied by the step-down transformers 31, 32, 33, 34 of the transformer room 1007 shown in FIG. 2 may be used more efficiently. For example, when the power supply system 1 of FIG. 15 is applied to an LNG carrier, the space of the transformer room 1007 may be used for other purposes (for example, cargo shipping) instead of placing the plurality of step-down transformers.

Further, due to the separation of the system, the power systems 100, 200 may be configured variously or differently depending on the design purpose.

In an embodiment, each power system 100, 200 is configured to configure and operate a power generator of optimal type for the load characteristics primarily included therein. For example, the essential load power system 100 may include a fixed RPM power generator, and the service load power system 200 may include a variable RPM power generator.

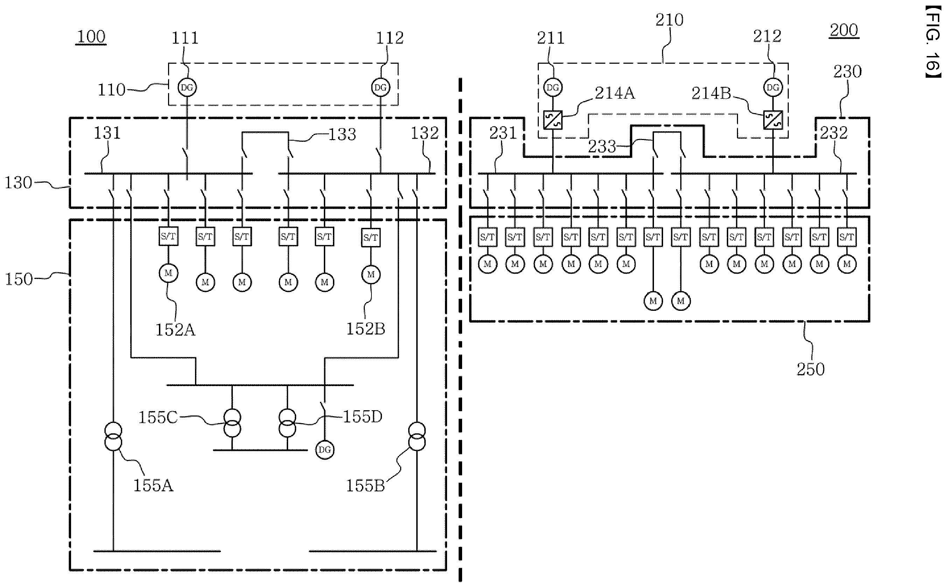

FIG. 16 is a schematic system architecture diagram of the power supply system for LNG carriers configured such that the service load power system has the variable RPM power generator, in an embodiment according to the second aspect of the present disclosure.

The power supply system 1 of FIG. 16 is similar to the power supply system 1 of FIG. 15 and will be described based on differences.

Referring to FIG. 16, the power generators 111, 112 of the essential load power system are fixed RPM power generators, and the power generators 211, 212 of the service load power system 200 are variable RPM power generators. In the case of the continuous load, there is no load variation due to the constant output characteristics, so there is almost no change in the load factor, while the variable load changes in the load factor.

Since most of the load of the essential load power system 100 corresponds to the continuous load having an invariable load factor, the fixed RPM power generator is driven to operate in the optimal efficiency range (i.e., the load factor range of 75 to 85%).

The prior single system based power supply system shown in FIG. 1 has a load section in which the load factor of the entire system is low due to the variable load since the electrical loads of the LNG carrier are put together in the single system. Accordingly, the power generation efficiency of the fixed RPM power generation reduces.

In contrast, in the power supply system 1 of FIG. 16, most of the variable load of the LNG carrier is separated from the power system 100, and thus a change in load factor by the variable load of the service load power system 200 does not affect the essential load of the essential load power system 100.

Accordingly, even though the fixed RPM power generator is applied to the essential load power system 100, the power generation efficiency is high in the medium or low load section.

In contrast, as described above, most of the load of the service load power system 200 is a variable load having a variable load factor.

Accordingly, the service load power system 200 of the power supply system 1 of FIG. 15 is configured to drive the variable RPM power generator that variably operates with the change in load factor of the power system 200.

In the service load power system 200 including the variable RPM power generator, when the rotational speed of the variable RPM power generator is controlled to RPM having the optimal power generation efficiency for each load section, it is possible to improve the fuel efficiency of the power generator which supplies power to the variable load, compared to the case of the continuous load and the variable load put together in the single system.

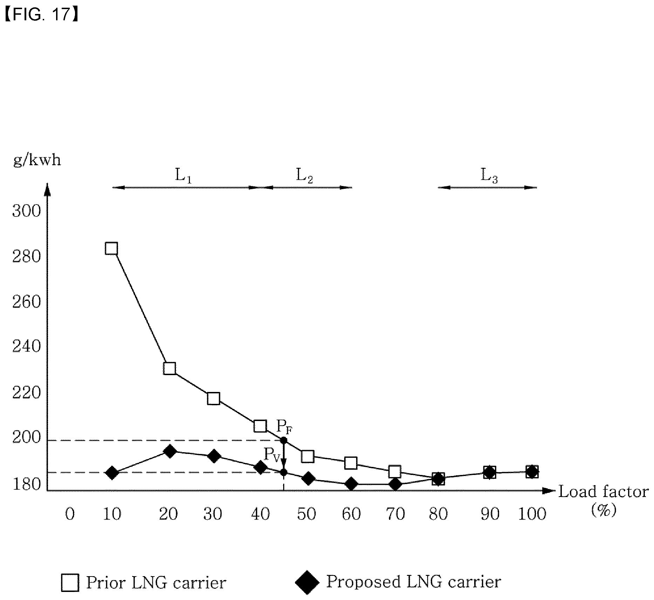

FIG. 17 is a diagram showing a relationship between the load factor of the load terminal in the power system and the fuel consumption amount of the power generator which supplies power to the load terminal.

As described above, the prior single power system supplies power to the variable load (for example, the LNG storage load) using the fixed RPM power generator. The service load of the entire cargo part has the average load factor on the level of 30 to 100%.

As described above, when power is supplied to the entire service load of the LNG carrier changing to the medium or low load using the fixed RPM power generator as conventionally, the power generation efficiency is low in the medium or low load section having a low load factor.

In contrast, when power is supplied to the service load having a variable load factor using the variable RPM power generator as in an embodiment of the present disclosure, compared to the power supply system of FIG. 13, the power generation efficiency is improved in the low load section having a low load factor.

Referring to FIG. 17, the power supply system of FIG. 13 has the fuel efficiency corresponding to P_{F} at the load factor of 45% as an example of the low load section. In contrast, the power supply system 1 of FIG. 16 has the fuel efficiency corresponding to Pv. When comparing P_{F} with Pv, it represents that the power supply system 1 of FIG. 16 consumes a smaller fuel amount in the generation of 1 kwh power. As a result, it is calculated that the power supply system 1 of FIG. 16 has an improvement result of the fuel consumption ratio of about 8% over the power supply system of FIG. 13 in generating the same power for the service load of the LNG carrier.

8% is provided by way of illustration, and when the service load is configured to have a load section in which the load factor varies over time, it is possible to further improve the power generation efficiency by controlling the rotational speed of the power generator to RPM having the optimal power generation efficiency, corresponding to the load section.

In the LNG carrier load, the low load section L1 is a section in which the load factor is 10-40%, and has the fuel consumption amount of about 285-210 g/kwh. The medium load section L2 is a section in which the load factor is 40-60%, and has the fuel consumption amount of about 210-194 g/kwh. The high load section L3 is a section in which the load factor is 80-100%, and has the fuel consumption amount of about 185-190 g/kwh. The power supply system 1 of FIG. 15 has nearly similar fuel consumption to the power supply system of FIG. 13 in the high load section L3. However, in the low load section L1, the fuel consumption ratio per kwh is improved by about 6-10% compared to FIG. 13, and in the medium load section L2, the fuel consumption ratio per kwh is improved by about 10-35% compared to FIG. 13.

As described above, the variable RPM power generator of the service power system 200 of FIG. 16 may improve the power generation efficiency of the power generation unit 210 by controlling the RPM based on the load factor of each load section.

Meanwhile, when the service load power system 200 performs AC power distribution, the switchboard 230 may be configured to have a specific frequency (for example, 50 Hz or 60 Hz). In this case, the power generation unit 210 is configured to generate AC power based on the load factor of each load section, and output an AC electrical signal having the frequency (for example, 50 Hz, or 60 Hz) that matches the frequency of the switchboard 230.

In an embodiment, the power generation unit 210 includes an AC/AC converter 214 disposed between the power generator 211 and the switchboard 230. The AC/AC converter 214 is configured to convert the frequency of the AC electrical signal generated by the variable RPM power generator to the specific frequency (for example, 50 Hz or 60 Hz) of the switchboard 230.

As a result, even though there is a RPM change of the variable RPM power generator 211 based on the load factor of each load section, the power generation unit 210 may output an AC electrical signal having the specific frequency of the switchboard 230.

Additionally, since the power supply system 1 for LNG carriers enables low voltage power distribution, the power distribution method in each power system 100, 200 may be configured to enable low voltage DC power distribution and/or low voltage AC power distribution.

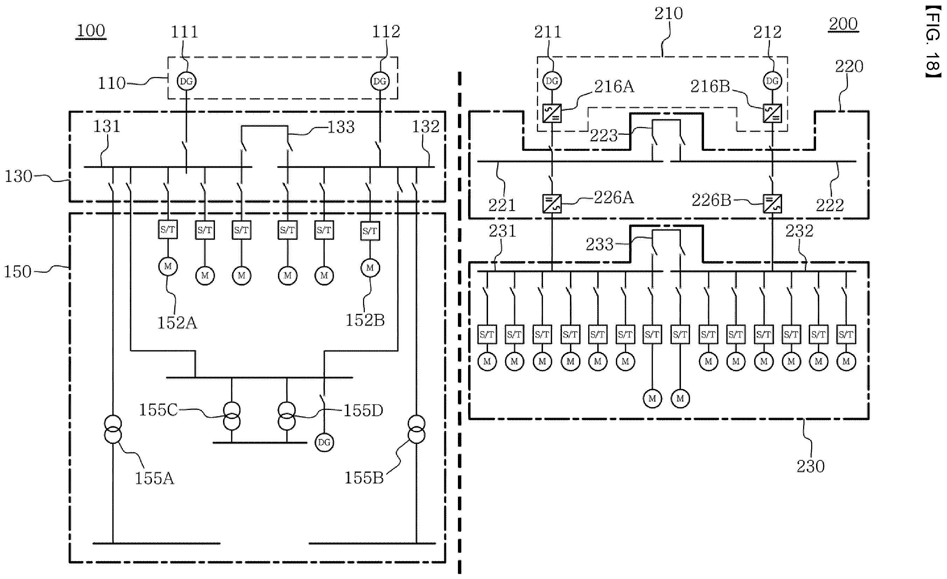

FIG. 18 is a schematic system architecture diagram of the power supply system for LNG carriers configured such that the essential load power system has a fixed RPM power generator to perform AC power distribution and the service load power system has a variable RPM power generator to perform partial DC power distribution, in an embodiment according to the second aspect of the present disclosure.

The power supply system 1 of FIG. 18 is similar to the power supply system 1 of FIG. 16, and will be described based on differences.

Referring to FIG. 18, the service load power system 200 is further configured to enable partial DC power distribution. In the power supply system 1, the power generators 111, 112 are fixed RPM power generators, and the power generators 211, 212 are variable RPM power generators.

In an embodiment, the power generation unit 210 may further include a DC/AC converter 216 to receive an AC electrical signal and convert to a DC electrical signal, and the second load unit may further include a DC/AC inverter 226 to receive a DC electrical signal and convert to an AC electrical signal.

When DC power distribution is performed, it is possible to prevent power losses caused by frequency and phase synchronization and reactive power.

Additionally, as shown in FIG. 18, the power system 200 may further include a DC switchboard 220 including a DC main bus 221 between the power generation unit 210 and the switchboard 230. The use of the DC switchboard 220 makes it possible to efficiently supply power to the plurality of service loads positioned in the carrier. In this case, the power system 200 may include a plurality of DC/AC inverters 226A to 226B which electrically connects the service loads of each of the switchboard 220 and the switchboard 230.

By the AC/DC converter 216 and the DC/AC inverter 226, the power system 200 enables DC power distribution in between the power generation unit 210 and the switchboard 230.

As described above, the power supply system 1 may be configured with fixed RPM power generator based AC power distribution for the essential load power system and variable RPM power generator based DC or AC power distribution for the service load power system.

Additionally, the power supply system 1 may be configured such that the voltages for power distribution of each power system 100, 200 are different from each other.

In an embodiment, the power supply system 1 is configured to perform low voltage power distribution through the switchboard 130 in the essential load power system 100, and perform high voltage power distribution through the switchboard 230 in the service load power system 200. Here, the low voltage power distribution of the essential load power system 100 may be performed using the fixed RPM power generator, and the high voltage power distribution of the service load power system 200 may be performed using the variable RPM power generator. In this case, the power generation unit 210 of the service load power system 200 is configured to output the high voltage (for example, 6.6 kV) electrical signal to the switchboard 230.

In addition, the power system 100, 200 may be efficiently configured in the component provision aspect.

In an embodiment, the service load power system 200 may perform low voltage power distribution through the switchboard 230, and the low voltage power distribution may be performed using the fixed RPM power generator. Referring back to FIG. 15, the service load power system 200 includes the power generation unit 210, low voltage the switchboard 230 and the service load unit 250.

Due to the system separation, the switchboard 230 performs low voltage power distribution. When the switchboard 230 distributes AC power, the frequency of the switchboard 230 is a specific frequency (for example, 50 Hz or 60 Hz).

The power generation unit 210 is configured to generate power having the frequency (for example, 50 Hz, or 60 Hz) that matches the frequency of the switchboard 230. For example, the power generation unit 210 may include a fixed RPM power generator to operate at a fixed RPM for the frequency that matches the frequency of the switchboard 230. In the case of high capacity power generators, fixed RPM power generators are lower priced and available more easily than variable RPM power generators.

In some embodiments, the power generation unit 210 may include a plurality of fixed RPM power generators 211, 212. The power generation capacity of the fixed RPM power generators 211, 212 may be equal to or higher than the power generation capacity of the service load 250. The fixed RPM power generator 211 or 212 has a sufficient power generation capacity to supply power to the service load power system 200 in the medium or low load section.

Due to the frequency matching structure between the power generation unit 210 and the switchboard 230, the service load power system 200 may perform low voltage AC power distribution in the switchboard 230 without requiring an additional power device (for example, a power converter) for frequency matching between the low voltage switchboard and the power generation unit.

For example, the power generator 211 or 212 of the service load power system 200 is a variable RPM power generator, and may generate power having the frequency in the variable frequency range (for example, 37 Hz to 60 Hz) according to the speed. In this case, a power converter (for example, a Matrix Converter) is required between the switchboard 230 having the specific frequency (for example, 50 Hz or 60 Hz) and the variable RPM power generator 211 to convert the frequency of the power outputted from the power generation unit 210 to the frequency of the switchboard 230 for frequency matching, and it is not easy to provide high capacity converters for converting the power generation capacity (for example, 3 MW) of power generators used in ships. Further, the price of variable RPM power generators is generally higher than the price of fixed RPM power generators.

As a result, the service load power system 200 including the fixed RPM power generator may maintain the advantages of low voltage power distribution, and construct the low voltage power distribution based power supply system in the ship at lower costs without requiring an additional power device (for example, a power converter) for frequency matching with the low voltage switchboard required when the variable power generator is applied. Further, it is possible to configure parts of the service load power system 200 on the basis of the prior available fixed RPM power generation, thereby making it easy to design.

Meanwhile, the service load power system 200 including the fixed RPM power generator is not limited to the low voltage AC power distribution structure in which AC power distribution is performed by the application of low voltage to the switchboard 230. In another embodiment, in the similar way to FIG. 18, the service load power system 200 including the fixed RPM power generator may be configured with a low voltage DC power distribution structure. In still another embodiment, the service load power system 200 including the fixed RPM power generator may be configured with a high voltage AC power distribution structure.

In addition, the power supply system 1 for ships may be configured such that the thruster motor 152 and the essential load power system 100 are not connected to each other.

FIG. 19 is a schematic system architecture diagram of the power supply system of the LNG carrier including the separated power system, in another embodiment according to the second aspect of the present disclosure.

The power supply system 1 of FIG. 19 is similar to the configuration of the power supply system 1 of FIG. 15, and will be described based on differences.

In FIG. 15, the power generation capacity of the essential load power system 100 connected to the thruster motor 152 is set based on both the power capacity of the thruster motor 152 and the power capacity of the continuous load required to continuously supply the power, defined as the essential load by the marine vessel rules. The thruster motor 152 is only driven for a short time when entering/leaving the port, but it is because the thruster motor 152 is a high capacity load and essential for navigation of the ship, and thus in the power supply system 1 of FIG. 15, the thruster motor 152 is included in the essential load power system 100.

Meanwhile, when the thruster motor 152 is connected to the essential load power system 100 including most of the continuous load, the essential load power system 100 has a considerable difference between the power generation capacity and the power consumption capacity of the load during most of the sailing time of the ship during which the thruster motor 152 does not operate. That is, it is necessary to install a power generator with over-specifications beyond the power generation capacity substantially required for the essential load power system 100, which requires higher power generator costs than the substantially required power generator costs.

In an embodiment, the thruster motor 152 is connected to the service load power system 200 which is a power system other than the essential load power system 100, and is configured not to consider the power capacity of the thruster motor 152 in setting the power generation capacity of the essential load power system 100. Additionally, the service load power system 200 uses the power in an alternating manner for a short time during which the thruster motor 152 operates, not to increase the additional power generation capacity, though the service load power system 200 is connected to the high capacity load (i.e., the thruster motor 152). In this case, the power supply system 1 for LNG carriers is further configured to control the power supply according to whether or not the thruster motor 152 is in operation.

Referring to FIG. 19, the thruster motor 152 receives the power of the power generation unit 210 through the switchboard 230. In an embodiment, the power generation unit 210 includes a variable RPM power generator. In another embodiment, the power generation unit 210 includes a fixed RPM power generator.

The thruster motor 152 is an important load that is important for ship navigation in the functional aspect, but corresponds to a secondary essential load that does not require the power supply continuously during ship navigation. Accordingly, the thruster motor 152 may not be connected to the essential load power system 100 which continuously supplies power to the essential load. For example, as shown in FIG. 19, the thruster motors 152A, 152B are connected to the switchboard 230 of the service load power system 200.

As described above, since the essential load power system 100 and the thruster motor 152 are not connected to each other, the essential load power system 100 increases in the load factor during ordinary navigation. As a result, it is possible to further increase the fuel efficiency and save the operation costs. Additionally, the power generation capacity of the essential load power system 100 reduces compared to when the essential load power system 100 is connected to the thruster motor 152 (for example, FIG. 15), so it is possible to apply a minimized power generator to the essential load power system 100, thereby reducing the power generator costs.

Additionally, the service load power system 200 includes a switching unit 125 to prevent the addition of the power generation capacity of the power generation unit 210 due to the additional connection of the thruster motor 152. By the switching unit 125, even though the thruster motor 152 connected to the service load power system 200 operates, the power supply to other service load is not insufficient.

In an embodiment, the switching unit 125 supplies the power of the power generation unit 110 to the thruster motor 152 through the switchboard 230. The switching unit 125 may include SPDT as shown in FIG. 19. The SPDT is configured to connect a first path running from the power generation unit 110 (for example, the power generator 112) to the switchboard 130, or a second path running from the power generation unit 110 (for example, the power generator 112) to the switchboard 230 of the service load power system 200.

The power supply by the switching unit 125 may be described as follows: for the exit of the LNG carrier, the switching unit 125 is switched to connect the second path by the control unit, and the power of the power generation unit 110 is supplied to the thruster motor 152 through the switchboard 230. After the LNG carrier left the port, the switching unit 125 is switched to connect the first path by the control unit, and the thruster motor 152 does not operate during ordinary navigation. Again, for the entry of the LNG carrier, the switching unit 125 is switched to connect the second path by the control unit, and the power of the power generation unit 110 is supplied to the thruster motor 152 through the switchboard 230.

By this switching structure, even when the thruster motor 152 is additionally connected to the service load power system 200, there is no additional increase in the power generation capacity of the service load power system 200.

Meanwhile, the power systems 100, 200 of FIG. 19 are not limited to the low voltage AC power distribution. As described above, a fixed RPM power generator or a variable RPM power generator may be applied according to the characteristics of the power system 200. Additionally, the power systems 100, 200 may be configured with low voltage AC power distribution, high voltage AC power distribution or low voltage DC structure.

In an embodiment, the power systems 100, 200 of FIG. 19 are configured to perform high voltage AC power distribution. In this case, the power generators 110, 210 are configured to output a high voltage electrical signal (for example, 6.6 KV).

FIG. 20 is a schematic system architecture diagram of the power supply system of the LNG carrier including the separated power system, in still another embodiment according to the second aspect of the present disclosure.

The power supply system 1 of FIG. 20 is similar to the power supply system 1 of FIG. 19, and will be described based on differences.

Referring to FIG. 20, the essential load power system 100 is configured to perform low voltage power distribution through the switchboard 130, and the service load power system 200 is configured to perform high voltage power distribution through the switchboard 230. In this case, the power generation unit 110 is configured to output a low voltage electrical signal (for example, 440 V), and the power generation unit 21 is configured to output a high voltage electrical signal (for example, 6.6 kV).

In this embodiment, the power outputted from the power generation unit 110 is supplied to the thruster motor 152 through a transformer 126 for alternating power. The transformer 126 for alternating power increases the low voltage electrical signal outputted from the power generation unit 110 and supplies it to the thruster motor 152 through the switchboard 230 to which high voltage is applied. The input voltage of the transformer 126 for alternating power relies on the output voltage of the power generation unit 110, and the output voltage of the transformer 126 relies on the applied voltage of the switchboard 230.

As described with reference to FIGS. 19 and 20, the power supply system 1 for LNG carriers may connect the thruster motor 152 to a power system other than the essential load power system 100, and apply a variety of power generators (for example, fixed or variable RPM power generators) according to the characteristics of the load terminal in the service load power system or configure a variety of power distribution structures (for example, low voltage DC power distribution, low voltage AC power distribution or high voltage AC power distribution).

As described above, the power system is configured for each of the service load and the essential load, thereby solving the problem with reduced power generation efficiency or reduced space utilization in the ship.

Additionally, the embodiments of the present disclosure about LPG carriers will be described below.

In general, LPG is stored in a specially fabricated cargo tank and transported by sea in a liquid state at low temperature (for example, -50°C). It is impossible to transport LPG by sea without controlling the temperature and pressure of the cargo tank during ordinary navigation.

Accordingly, an LPG carrier is configured to propel the ship and safely transport LPG by sea.

The electrical loads in the LPG carrier may include the essential loads relevant to navigation (for example, an Essential load-Fuel oil supply pump, a Fuel valve cooling pump) and the service loads irrelevant to navigation (for example, a service Load).

The essential load in the LPG carrier is an electric motor for propulsion and navigation, for example, a cooling sea water pump, a lubricating oil pump and a ballast pump. The service load includes an LPG storage load configured to allow the cooling and compression process system to operate according to the outside temperature of the pipeline and the cargo tank of the LPG carrier.

The essential load and the service load of the LPG carrier may include a continuous load with constant power consumption during driving, and a variable load with varying power consumption amount depending on the driving characteristics. In general, the LPG carrier uses an AC power supply system, and a continuous load and a variable load are put together and connected to a single power system, so the LPG carrier has a very high load capacity.

FIG. 21 is a diagram showing the system architecture of a power supply system for LPG carriers configured as a single system in which the essential loads and the service loads are put together, according to an embodiment of the related art.

Referring to FIG. 21, the power supply system for LPG carriers in which the essential loads and the service loads are put together in a single power system includes a power generation unit 10; a low voltage switchboard 20 to receive the power from the power generation unit 10 and transmit the power to the load or another switchboard; a load unit 50 in which the essential load and the service load are put together, supplied with power through the low voltage switchboard 20; and another low voltage switchboard 60.

The power supply system of FIG. 21 is configured as a single power system and thus has low performance in terms of power generation efficiency.

The power generator applied to the LPG carrier is generally a fixed RPM power generator. The fixed RPM power generator has high fuel efficiency when the fixed RPM power generator generates power such that the load factor is a value between about 75 and 85%.

Meanwhile, the power generation capacity of the fixed RPM power generator included in the power generation unit 10 is calculated based on the maximum load power of the continuous load and the variable load. Since most of the essential load of the LPG carrier is a continuous load, a change in the load factor of the essential load is not so large.

In contrast, the service load of the LPG carrier that performs the operation of cooling, compression, storage and unloading of LPG cargo corresponds to a variable load of which the load factor changes over time. For example, the LPG carrier may include a cargo part load as the service load. In the LPG carrier to which the system of FIG. 21 is applied, the average load factor of the total service load of the cargo part has a value between about 30 and 60%.

Accordingly, when power required for the power system is lower than the maximum load power by the driving characteristics like the variable load, the single power system has a reduction in the load factor of the entire system, resulting in the reduced power generation efficiency of the system.

Generally, the LPG carrier to which the power supply system of FIG. 21 is applied has the load factor between about 40 and 70% (for example, 43-71%) for each operation mode.

As a result, as the service load and the essential load are put together in the single system, the power generation efficiency of the power supply system reduces in the medium or low load section.

Additionally, due to the single power system, the power generation capacity of the power generator relies on the total load capacity of the single power system. Accordingly, as a high capacity power generator is installed, there is a problem with reduced space utilization in the engine room.

In the embodiments according to the third aspect of the present disclosure, the power supply system for LPG carriers is configured such that a power system is separated into the essential load power system primarily including the essential loads and the service load power system primarily including the service loads. The essential load and the service load do not share the switchboard. The power supply system is applied to medium scale LPG ships of 50 k or more and less than 100 k and is configured to enable low voltage power distribution.

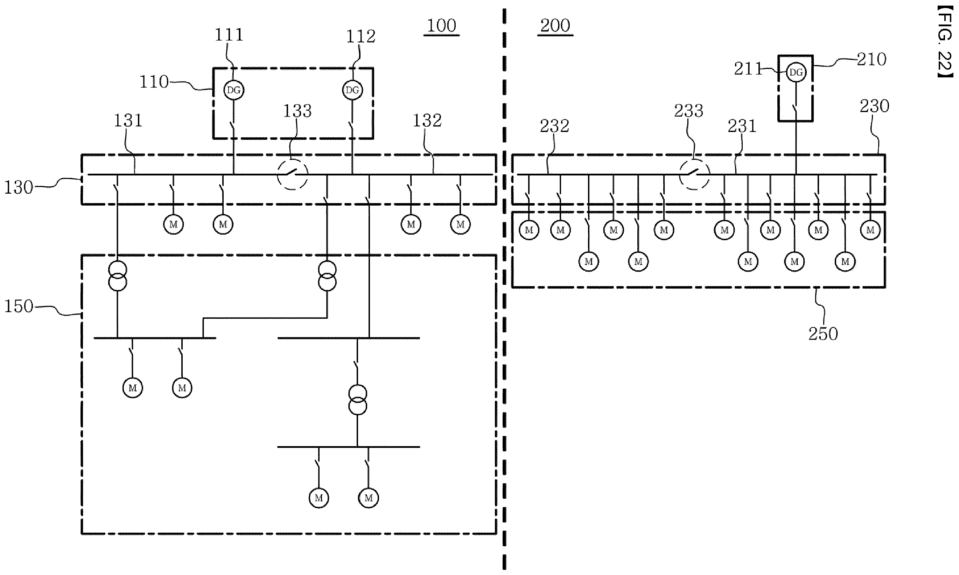

FIG. 22 is a schematic system architecture diagram of the power supply system for LPG carriers including the separated power system, according to an embodiment of the present disclosure.

Referring to FIG. 22, the power supply system 1 for LPG carriers includes at least one power system 100, 200. The power system 100 includes a power generation unit 110, a switchboard 130 including a main switchboard and an essential load unit 150 including the essential load which operates for ship navigation, and is hereinafter referred to as an essential load power system. The power system 200 includes a power generation unit 210, a switchboard 230 including a main switchboard and a service load unit 250 including the service load which operates to carry LPG.

Additionally, the power supply system 1 for LPG carriers may further include a control unit (not shown) to monitor the condition of the power system and control the power supply. The control may include at least one of a Power Management System (PMS), an Energy Management System (EMS) or an Energy Power Management System (EPMS).

Hereinafter, for clarity of description, the power supply system 1 for LPG carriers is described as including two power systems 100, 200, but is not interpreted as being limited thereto. Additionally, in some cases, the detailed description of the two elements is made representative of a detailed description of one element.

As shown in FIG. 22, the power supply system 1 for LPG carriers is configured such that the power system is separated for each of the essential load and the service load.

The power generation unit 110 supplies power to the essential load unit 150 through the switchboard 130 to allow the load of the essential load unit 150 to consume the power and bring it into operation.

The power generation unit 110 outputs an AC electrical signal, and includes a plurality of power generators (for example, power generators 111, 112 of FIG. 22). The attributes and power generation capacity of the power generators 111, 112 rely on the load. For example, when the motor load for the operation of the LPG carrier is a constant output load, an AC power generator may be used. Additionally, when the capacity factor of the power generator is 85% and the load capacity is 1 MW, the power generation capacity of the power generator may be about 1.2 MW.

The capacity of one power generator included in the power generation unit 110 has a sufficient capacity to supply power to the essential load unit 150 in ordinary navigation mode. In this case, at least one of the plurality of power generators 111, 112 is designated as a standby power generator, and the standby power generator is set not to operate during ordinary navigation.

In an embodiment, when an accident occurs in the power generator (for example, 111) which is operating in the essential load power system 100, the power supply system 1 is configured to supply power from the standby power generator (for example, 112) included in the essential load power system 100 to the essential load unit 150.

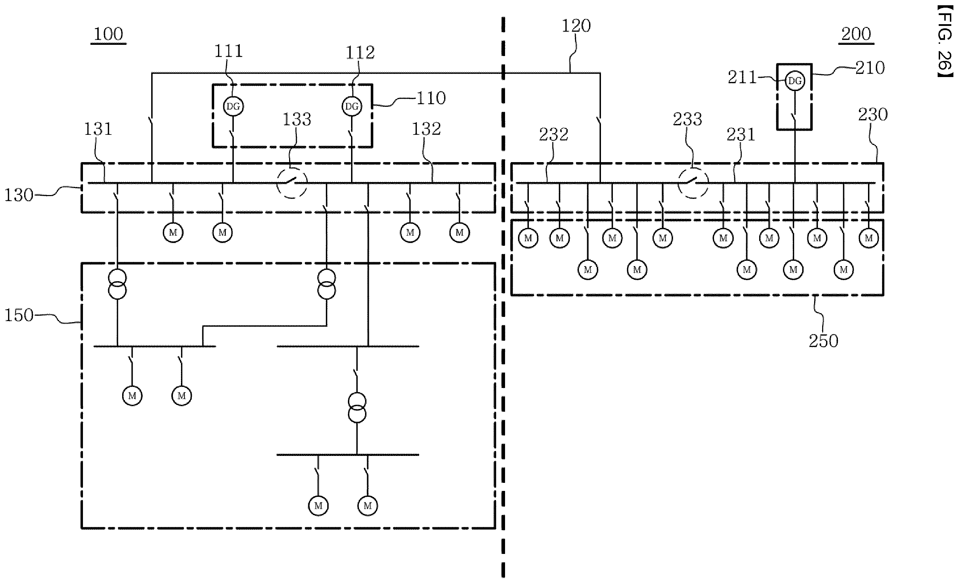

In an embodiment, the standby power generator of the essential load power system 100 may operate to supply power to the service load of the service load power system 200. It will be described in more detail with reference to FIGS. 26 to 28 as below.

The power generators 111, 112 may include diesel generators, hybrid fuel power generators, gas fuel power generators and gas turbines, but not limited thereto. Additionally, the power generation unit 110 may further include at least one switch and/or disconnector to control the power supply according to situations. For example, as shown in FIG. 22, when the power supply system 1 for LPG carriers includes two power generators 111, 112, the power supply system 1 for LPG carriers may further include two switches.

The switchboard 130 performs AC power supply. In an embodiment, the switchboard 130 may include a main switchboard of the power system 100. The main switchboard may include a bus cable, and in this case, the bus cable may be referred to as a main bus.

Additionally, in some embodiments, the switchboard 130 may include a plurality of bus cables. For example, the switchboard 130 may further include a plurality of bus cables such as a main bus 131 electrically connected to the power generator 111 and a main bus 132 electrically connected to the power generator 112. In this case, the switchboard 130 may further include a bus tie breaker 133 which electrically connects the plurality of main buses 131, 132 in normal condition, but shuts off the electrical connection in case of emergency and/or accidents.

The power system 100 enables low voltage power distribution, and the switchboard 130 to which AC voltage is applied supplies power to the load.

The elements of the power system 100 may be electrically connected to each other for their interaction. For example, the power supply system 1 for LPG carriers may supply power to the essential load using a power supply line electrically connecting from the power generation unit 110 to the essential load unit 150 through the switchboard 130.

The essential load unit 150 of the power system 100 includes an essential load which is essentially required to operate for ship navigation. The essential load includes an essential load defined by the marine vessel rules and a secondary essential load (for example, an important load) which is essentially required to operate for ship navigation, but not included in the essential load according to the marine vessel rules.

The essential load used for the operation of the LPG carrier may include, for example, a lubricating oil pump, an engine fuel supply pump, a cooling pump and a water spray pump, but is not limited thereto. Most of the essential load included in the essential load unit 150 corresponds to a continuous load having a nearly invariable load factor.

In some embodiments, the essential load unit 150 may further include a VFD based load. The VFD based load is an essential load which optimizes the power consumption of the load terminal according to the navigation characteristics, such as a Central Cooling System. For example, the VFD load includes an essential load configured to control the temperature and pressure of the cooling pump configured to control the temperature of cooling water.

Additionally, as shown in FIG. 22, the essential load unit 150 may include at least one sub-switchboard which supplies power at voltage equal to or lower than the voltage of the switchboard 130. In this case, the essential load unit 150 may further include a transformer positioned between the switchboard 130 and the sub-switchboard to decrease the voltage.

The capacity of the essential load power system 100 is lower than the capacity of the single power system of FIG. 1, and thus the transformer of the essential load unit 150 is a small transformer having lower capacity than the transformer of FIG. 1. Accordingly, there are benefits in terms of transformer installation costs and space utilization.

Additionally, the power system 100 may further include an emergency power generator to supply power in emergency situations such as blackouts and an emergency switchboard including a load which operates in that time. The emergency switchboard may include shore power and emergency load.

The elements and operations of the power system 200 are similar to the elements and operations of the power system 100 in a significant part, and will be described based on differences.

In contrast, the service load unit 250 of the power system 200 includes the service loads additionally used for any purpose other than navigation of the LPG carrier. Additionally, the variable load unit 250 may further include at least one sub-switchboard (not shown) to supply power at lower voltage than the switchboard 230.

The service load includes an LPG storage load used to store LPG and a user convenience load used for convenience of passengers of the LPG carrier.

LPG is a flammable material, and the LPG carrier needs to control the temperature and pressure of the cargo tank or the pipeline to load or unload LPG efficiently and stably. Additionally, to safely transport LPG by sea, it is necessary to continuously control the temperature and pressure of the cargo tank even during ordinary navigation.

Accordingly, the LPG storage load including a load which operates for loading, unloading and storing LPG in the LPG carrier, and a load which operates for managing the stored LPG during navigation (for example, LPG cooling and compression) corresponds to a variable load. Accordingly, most of the service load corresponds to a variable load having a variable load factor.

The LPG storage load includes, for example, a cargo compressor, a cargo pump, a cargo spray pump, a stripping pump, a deep well pump and a booster pump, but is not limited thereto.

As described above, since each separated power system 100, 200 of the power supply system 1 for LPG carriers has an independent system configuration, the power systems 100, 200 may be configured variously or differently depending on the design purpose.

In an embodiment, each power system 100, 200 is configured to configure and operate a power generator of optimal type for the load type primarily included therein.

For example, the essential load power system 100 (for example, the power generation unit 110) may include a fixed RPM power generator, and the service load power system 200 may include a variable RPM power generator.

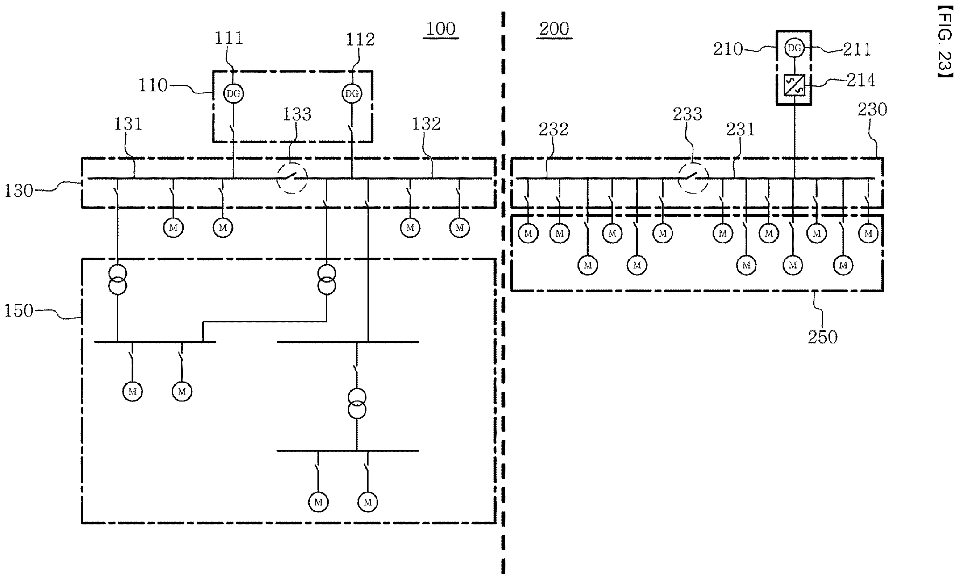

FIG. 23 is a schematic system architecture diagram of the power supply system for LPG carriers configured such that the service load power system has a variable RPM power generator, according to an embodiment of the present disclosure.

The power supply system 1 of FIG. 23 is similar to the power supply system 1 of FIG. 22, and will be described based on differences.

Referring to FIG. 23, the power generators 111, 112 of the essential load power system 100 are fixed RPM power generators, and the power generator 211 of the service load power system 200 is a variable RPM power generator. In the case of the continuous load, there is no load variation due to the constant output characteristics, so there is almost no change in the load factor, while the variable load changes in the load factor.

Most of the load of the essential load power system 100 corresponds to a continuous load having an invariable load factor. The power generators 111, 112 of FIG. 23 are configured to operate in the optimal efficiency range (i.e., the load factor range of 75 to 85%).

The prior single system based power supply system shown in FIG. 1, in which the ship loads of the LPG carrier are put together in the single system, has the load factor in the range of about 40 to 70% (for example, 43 to 71%) for each operation mode of the LPG carrier.

In contrast, in the power supply system 1 of FIG. 22, the ship load of the LPG carrier is separated into the ship load power systems 100, 200, and thus a change in load factor by the variable load of the service load power system 200 does not affect the essential load of the essential load power system 100.

Additionally, in the power supply system 1 of FIG. 23, the ship load of the LPG carrier is separated into the power systems 100, 200, and thus the total load capacity of the power system including the essential load is lower than that of the power system (i.e., the entire power supply system of FIG. 1) including the essential load in FIG. 1. Accordingly, compared to the power supply system of FIG. 1, it is possible to reduce the capacity of the power generator (or the engine) used to supply power to the essential load. As a result, it is possible to reduce the installation costs of the power generator for the essential load and increase the space utilization in the engine room.

In contrast, as described above, most of the load of the service load power system 200 is a variable load having a variable load factor.

Accordingly, the service load power system 200 of the power supply system 1 of FIG. 23 is configured to drive the variable RPM power generator that variably operates with the change in load factor of the power system 200.

In the service load power system 200 including the variable RPM power generator, when the rotational speed of the variable RPM power generator is controlled to RPM having the optimal power generation efficiency for each load section, it is possible to improve the fuel efficiency of the power generator which supplies power to the variable load, compared to the case of the continuous load and the variable load put together in the single system.

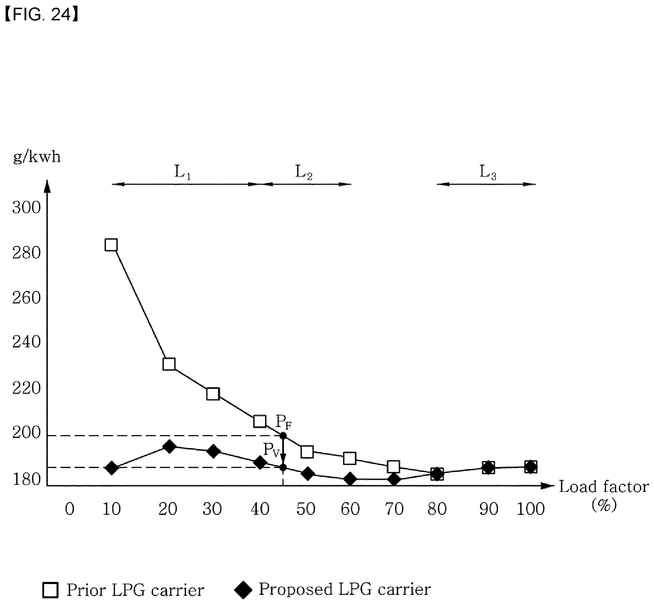

FIG. 24 is a diagram showing a relationship between the load factor of the load terminal in the power system and the fuel consumption amount of the power generator which supplies power to the load terminal.

As described above, the prior single power system supplies power to the variable load (for example, the LPG storage load) using the fixed RPM power generator. The service load of the entire cargo part has the average load factor on the level of 30 to 60%.

As described above, when power is supplied to the entire service load of the LPG carrier changing to the medium or low load using the fixed RPM power generator as conventionally, the power generation efficiency is low in the medium or low load section having a low load factor.

In contrast, when power is supplied to the service load having a variable load factor using the variable RPM power generator as in an embodiment of the present disclosure, compared with the power supply system of FIG. 1, the power generation efficiency is improved in the low load section having a low load factor.

Referring to FIG. 24, the power supply system of FIG. 1 has the fuel efficiency corresponding to P_{F} at the load factor of 45% as an example of the low load section. In contrast, the power supply system 1 of FIG. 23 has the fuel efficiency corresponding to Pv. When comparing P_{F} with Pv, it represents that the power supply system 1 of FIG. 23 consumes a smaller fuel amount in the generation of 1 kwh power. As a result, it is calculated that the power supply system 1 of FIG. 23 has an improvement result of the fuel consumption ratio of about 8% over the power supply system of FIG. 1 in generating the same power for the service load of the LPG carrier.

8% is provided by way of illustration, and when the service load is configured to have a load section in which the load factor varies over time, it is possible to further improve the power generation efficiency by controlling the rotational speed of the power generator to RPM having the optimal power generation efficiency, corresponding to the load section.

In the LPG carrier load, the low load section L1 is a section in which the load factor is 10-40%, and has the fuel consumption amount of about 285-210 g/kwh. The medium load section L2 is a section in which the load factor is 40-60%, and has the fuel consumption amount of about 210-194 g/kwh. The high load section L3 is a section in which the load factor is 80-100%, and has the fuel consumption amount of about 185-190 g/kwh. The power supply system 1 of FIG. 23 has nearly similar fuel consumption to the power supply system of FIG. 1 in the high load section L3. However, in the low load section L1, the fuel consumption ratio per kwh is improved by about 6-10% compared to FIG. 1, and in the medium load section L2, the fuel consumption ratio per kwh is improved by about 10-35% compared to FIG. 1.

As described above, the variable RPM power generator of the service power system 200 of FIG. 23 may improve the power generation efficiency of the power generation unit 210 by controlling the RPM based on the load factor of each load section.

Meanwhile, when the service load power system 200 enables AC power distribution, the switchboard 230 may be configured to have a specific frequency (for example, 50 Hz or 60 Hz). In this case, the power generation unit 210 is configured to generate AC power based on the load factor of each load section, and output an AC electrical signal having the frequency (for example, 50 Hz, or 60 Hz) that matches the frequency of the switchboard 230.

In an embodiment, the power generation unit 210 includes an AC/AC converter 214 disposed between the power generator 211 and the switchboard 230. The AC/AC converter 214 is configured to convert the frequency of the AC electrical signal generated by the variable RPM power generator to the specific frequency (for example, 50 Hz or 60 Hz) of the switchboard 230.

As a result, even though there is a RPM change of the variable RPM power generator 211 based on the load factor of each load section, the power generation unit 210 may output an AC electrical signal having the specific frequency of the switchboard 230.

Additionally, since the power supply system 1 for LPG carriers enables low voltage power distribution, the power distribution method in each power system 100, 200 may be configured to enable low voltage DC power distribution and/or low voltage AC power distribution.

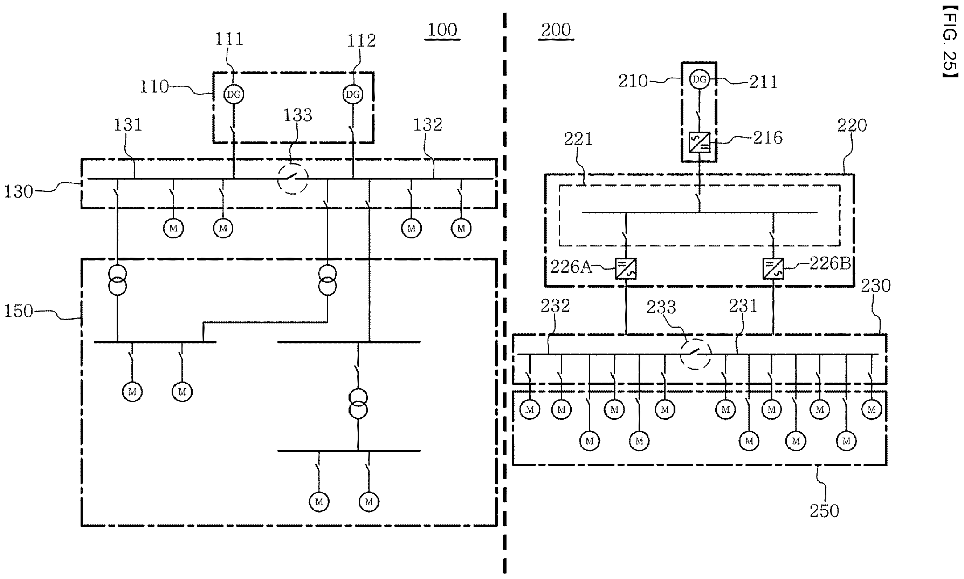

FIG. 25 is a schematic system architecture diagram of the power supply system for LPG carriers configured such that the essential load power system has a fixed RPM power generator to perform AC power distribution and the service load power system has a variable RPM power generator to perform partial DC power distribution, according to an embodiment of the present disclosure.

The power supply system 1 of FIG. 25 is similar to the power supply system 1 of FIG. 23, and will be described based on differences.

Referring to FIG. 25, the service load power system 200 is further configured to enable partial DC power distribution. In the power supply system 1, the power generators 111, 112 may be fixed RPM power generators, and the power generator 211 may be a variable RPM power generator.

In an embodiment, the power generation unit 210 may further include an AC/DC converter 216 to receive an AC electrical signal and convert to a DC electrical signal, and the second load unit may further include a DC/AC inverter 226 to receive a DC electrical signal and convert to an AC electrical signal.

When DC power distribution is performed, it is possible to prevent power losses caused by frequency and phase synchronization and reactive power.

Additionally, as shown in FIG. 25, the power system 200 may further include a DC switchboard 220 including a DC main bus 221 between the power generation unit 210 and the switchboard 230. The use of the DC switchboard 220 makes it possible to efficiently supply power to the plurality of service loads positioned in the carrier. In this case, the power system 200 may include a plurality of DC/AC inverters 226A to 226B which electrically connects the service loads of each of the switchboard 220 and the switchboard 230.

By the AC/DC converter 216 and the DC/AC inverter 226, the power system 200 enables DC power distribution in between the power generation unit 210 and the switchboard 230.

As described above, the power supply system 1 may be configured with fixed RPM power generator based AC power distribution for the essential load power system and variable RPM power generator based DC or AC power distribution for the service load power system.

In addition, the power supply system 1 for LPG carrier is further configured to monitor the condition of the power system and control the power supply.

FIG. 26 is a schematic system architecture diagram of the power supply system for LPG carriers further configured to distribute power to the service load in case of emergency, according to an embodiment of the present disclosure.

The power supply system 1 of FIG. 26 is similar to the power supply system 1 of FIG. 22, and will be described based on differences.

As described above, the essential load power system 100 includes a plurality of power generators (for example, 111, 112 of FIG. 26), and the plurality of power generators includes a power generator (for example, 111 of FIG. 26) which operates during navigation and a standby power generator (for example, 112 of FIG. 26) which operates when an accident occurs in the power generator.

In an embodiment, when an accident occurs in the power generator 211 of the service load power system 200, the power supply system 1 is configured such that the standby power generator of the essential load power system 100 supplies power to the service load unit 250.

Referring to FIG. 26, the essential load power system 100 includes a redundancy unit 120 to enable power supply to the service load power system 200.

When the essential load power system 100 and the service load power system 200 are configured as an AC based power system, the redundancy unit 120 includes a switch for bus connection to connect the switchboard 130 to the switchboard 230.

The power supply system 1 of FIG. 26 monitors the electrical signal or the power supply condition of the power system 200 (for example, by the control unit), and detects an occurrence of an accident in the power generator of the power system 200 based on the monitoring results. The power supply system 1 is configured to electrically connect the switchboard 130 of the essential load power system 100 to the switchboard 230 of the service load power system 200 separated from each other, by controlling the redundancy unit 120 in response to the detection of an accident in the power generator, and maintain the power supply to the load unit (i.e., the service load unit 250) of the power system in which the accident occurred, using the standby power generator.

When the electrical signal of the power generation unit 210 is within a predetermined threshold range, the control unit determines as a normal condition in which an accident did not occur. In contrast, when the electrical signal of the power generation unit 210 exceeds the predetermined threshold range, it is determined that an accident occurred. The threshold range may be variously set according to the power generation scale and the power generation system of the power generator.

Meanwhile, it will be obvious to those skilled in the art that the power supply system 1 configured to supply power to the service load power system 200 by controlling the redundancy unit 120, described with reference to FIG. 26, is not limited to the configuration of FIG. 26. For example, the power supply system 1 of FIG. 26 may be implemented as an embodiment in which the power generator 211 is a fixed RPM power generator, and the power generation unit 210 does not include the AC/AC converter 214.

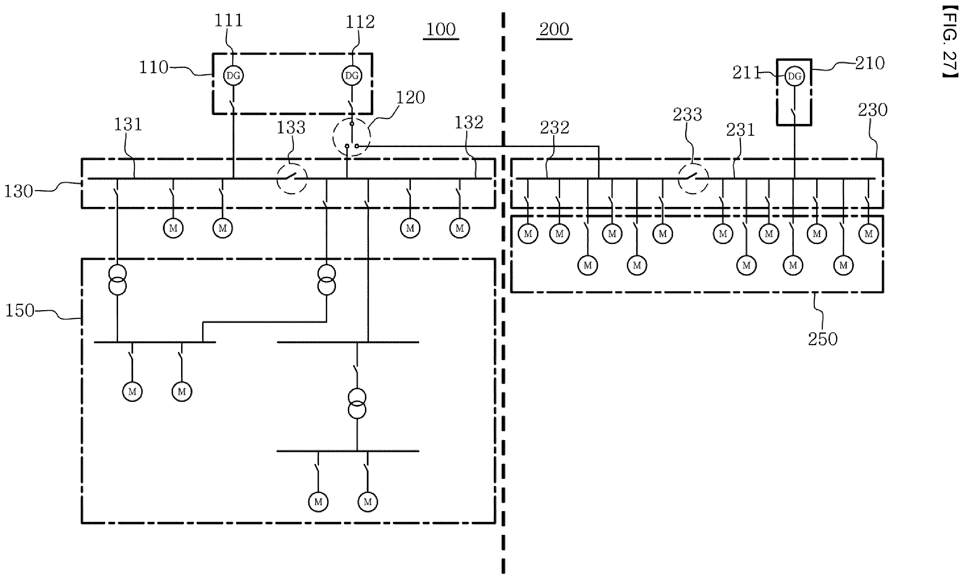

FIG. 27 is a schematic system architecture diagram of the power supply system for LPG carriers further configured to distribute power to the service load in case of emergency, according to another embodiment of the present disclosure.

The power supply system 1 of FIG. 27 is similar to FIG. 26, and will be described based on differences from FIG. 26.

Referring to FIG. 27, the redundancy unit 120 may include SPDT. The SPDT is configured to connect a first path running from the standby power generator (for example, 112) to the switchboard 130, or a second path running from the standby power generator to the switchboard 230 of the service load power system 200.

In FIG. 27, when an accident occurs in the power generator 211, the control operation for maintaining the power supply to the service load unit 250 by controlling the redundancy unit 120 is similar to FIG. 26, and its detailed description is omitted herein.

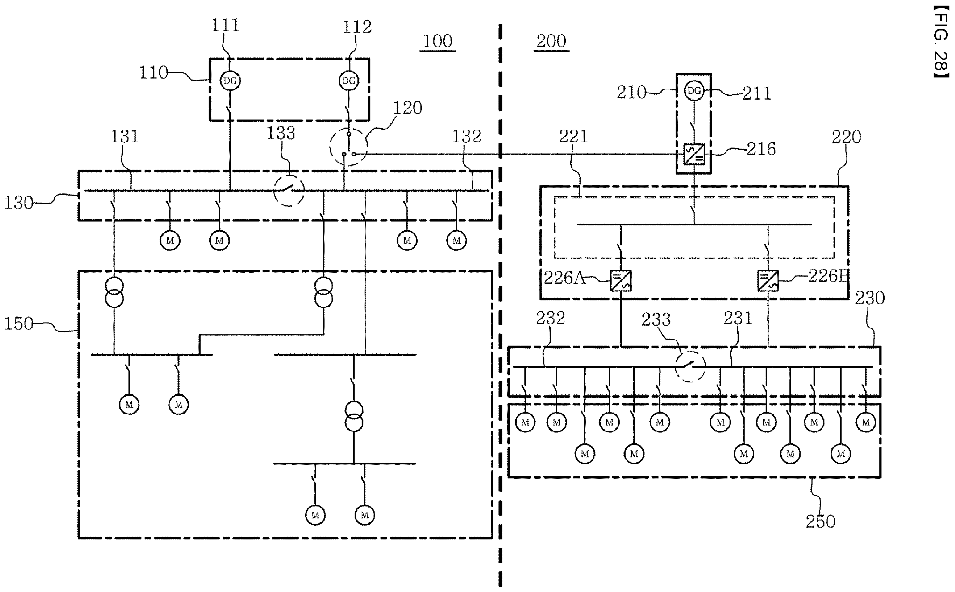

FIG. 28 is a schematic system architecture diagram of the power supply system for LPG carriers further configured to distribute power to the service load having a variable RPM power generator to perform partial DC power distribution in case of emergency, according to an embodiment of the present disclosure.

The power supply system 1 of FIG. 28 is similar to the power supply system of FIG. 25, and will be described based on differences from FIG. 25.

Referring to FIG. 28, the service load power system 200 is configured to perform partial DC power distribution. Additionally, the essential load power system 100 includes the redundancy unit 120 to enable power supply from the standby power generator (for example, 112) to the service load unit 250.

In an embodiment, the redundancy unit 120 includes SPDT. The SPDT is configured to connect a first path running from the standby power generator (for example, 112) to the switchboard 130, or a second path running from the standby power generator to the AC/DC converter 216 of the service load power system 200.

The redundancy unit 120 of FIG. 28 is configured to allow the standby power generator of the power generation unit 110 to supply power to the service load unit 250 through the pre-designed AC/DC converter 216, thereby eliminating the need for an additional converter to convert the power of the standby power generator to DC within the service load power system 200.

When an accident occurs in the power generator 211, the redundancy unit 120 of FIG. 28 is controlled to enable the standby power generator to supply power to the service load unit 250 and allow the power of the standby power generator to be transmitted through the AC/DC converter 216 and the DC/AC inverter 226, so that the power supply system 1 supplies the power of the standby power generator to the service load unit 250 by DC power distribution in case of emergency.

In FIG. 28, the control operation for maintaining the power supply to the service load unit 250 by controlling the redundancy unit 120 when an accident occurs in the power generator 211 is similar to FIGS. 26 and 27, and its detailed description is omitted herein.

The power supply system 1 described with reference to FIGS. 26 to 28 may supply power to the service load unit 250 even when an accident occurs in the power generator within the separated service load power system 200. Accordingly, it is possible to maintain the power supply to the LPG storage load such as the cargo tank in which LPG is stored, and thus keep control of the temperature and pressure of the cargo tank, thereby transporting LPG safely.

As described above, the power system is separated into the essential load and the service load and designed with a redundancy structure, thereby enhancing the stability and reliability of the service load power system.

In the specification, the structure of the power supply system 1 shown based on FIG. 3 may be different depending on the ship environment such as the load capacity included in the ship. For example, three power generators may be included in the power system 100. Additionally, the power generation capacity of the three power generators may be equal or unequal.

Additionally, 440 V applied to the switchboard 130 of FIG. 3 is an example of lower voltage than 6.6 kV of FIG. 1, and the switchboards 130, 230 may supply power at different voltages in some cases. For example, 450 V may be applied to the switchboard 130 according to the rated voltage of different loads, or 690 V may be applied to the switchboard 230 by the AC/DC converter.

In addition, the power supply system 1 may control the driving of the power generator and adjust the amount of power supplied to the load unit according to the time interval (or the operation mode). For example, when the essential load unit 150 of the power system 100 does not need the power generation capacity of the two power generators 111, 112, the power supply system 1 for ships may set at least one power generator (for example, the power generator 111) to a standby power generator to stop the driving and supply the power to the essential load unit 150 and use for other purposes using the standby power generator, where necessary.

While the present disclosure has been hereinabove described with reference to the embodiments shown in the drawings, this is provided for illustration purposes only and it will be appreciated by those skilled in the art that various modifications and variations may be made thereto. However, it should be noted that such modifications fall within the technical protection scope of the present disclosure. Therefore, the true technical protection scope of the present disclosure should be defined by the technical spirit of the appended claims.

### [Industrial Applicability]

The ship according to an embodiment of the present disclosure may have an essential load power system including loads corresponding to an essential load according to the marine vessel rules and a secondary essential load (for example, an important load) which does not correspond to an essential load according to the marine vessel rules but is required for navigation of the ship, and a service load power system. Accordingly, it is possible to enable low voltage power distribution, so there is no need for high priced shutoff equipment for high voltage and a high capacity step-down transformer to convert high voltage to low voltage, thereby reducing the system installation costs.

Additionally, it is expected that improvements in the power generation efficiency of the system and the space utilization in the ship will provide high possibilities of utilization in the field of ships.

## Claims

1. A ship having essential loads and service loads, the ship comprising:
a first power system associated with the essential loads; and
a second power system associated with the service loads.

2. The ship according to claim 1, wherein the first power system and the second power system include a fixed RPM power generator.

3. The ship according to claim 1, wherein the first power system includes a first power generation unit, a first switchboard and the essential load required for navigation of the ship, and
the second power system includes a second power generation unit, a second switchboard and the service load for a service of the ship.

4. The ship according to claim 2, wherein the fixed RPM power generator of the second power generation unit is configured to generate power having a frequency that matches a frequency of the second switchboard.

5. The ship according to claim 2, wherein the second power generation unit includes a plurality of power generators, and
the second switchboard includes a plurality of buses.

6. The ship according to claim 5, wherein only one of the plurality of power generators generates power in a medium or low load section, and the second switchboard is controlled by a closed-bus.

7. The ship according to claim 1, wherein the first power system and the second power system include only low voltage switchboards which supply power to the loads at low voltage.
